# EUROPEAN PATENT APPLICATION

(11) **EP 4 814 659 A1**
(43) Date of publication of application: **30.09.2026**
(21) Application number: 24893838.3
(22) Date of filing: 11.09.2024
(51) Int. Cl.: G06F 1/329, G06F 1/20, G06F 9/46, G06F 9/50

(54) **INFORMATION PROCESSING SYSTEM**

(30) Priority: 20.11.2023 JP 2023196829
(71) Applicant: Mitsubishi Electric Corporation, Tokyo 100-8310 (JP)
(72) Inventor: SAGARA, Yuta, Tokyo 100-8310 (JP); YAMAUCHI, Kazuki, Tokyo 100-8310 (JP); OKUBO, Takuya, Tokyo 100-8310 (JP); SUGAWARA, Junichi, Tokyo 100-8310 (JP); HORINOUCHI, Katsuhiko, Tokyo 100-8310 (JP); YAMAGUCHI, Shinichi, Tokyo 100-8310 (JP)
(74) Representative: Parker, Andrew James
(86) International application number: PCT/JP2024/032506
(87) International publication number: WO 2025/109843

(57) **Abstract**

The present invention is provided with a first control unit (15) that controls information processing devices (1-1 to 1-n), and a second control unit (16) that controls electrical power equipment (11a, 11b) and cooling equipment (12a, 12b). A predicted value of increase in power consumption of each of equipment groups configured by combining a plurality of the information processing devices, a plurality of pieces of the electrical power equipment, and a plurality of pieces of the cooling equipment according to an arrangement in a server room (30) is calculated on the basis of operational information of the electrical power equipment (11a, 11b) and the cooling equipment (12a, 12b) that are operating; among information processing devices that satisfy a processing condition necessary for assigning a new job, an information processing device that incurs a smallest increase in power consumption is selected; and among equipment groups including the selected information processing device, the new job is assigned to an equipment group that incurs a smallest increase in power consumption resulting from an increase in power of the selected information processing device. This enables power-saving management.

## Description

### TECHNICAL FIELD

The present invention relates to an information processing system.

### BACKGROUND ART

Along with the development of information and communication represented by cloud computing, there has been a demand for higher performance and greater diversity of a group of information processing devices that constitute the infrastructure. Meanwhile, in an effort to prevent global warming, it is an important challenge to reduce not only the power consumption of a group of information processing devices but also the overall power consumption, including the power consumption of equipment that supplies power to each information processing device and the power consumption of equipment that cools each information processing device.

For example, in Patent Document 1, when workloads are assigned to the information processing devices, the total power consumption of information processing devices, power supply equipment, and air-conditioning equipment is calculated for each assignment combination, and computation is performed for all possible assignment combinations across all the information processing devices, so that a combination for which the total power consumption becomes the smallest extracted. In addition, in Patent Document 2, the operating information of three components, i.e., an information processing device, power supply equipment, and air conditioning equipment, is acquired for each hierarchical group, and control is performed such that the performance relative to power consumption can be optimized on a hierarchical group basis.

### CITATION LIST

### PATENT DOCUMENT

Patent Document 1: Japanese Laid-Open Patent Publication JP 2009 - 252 056 A
Patent Document 2: International Publication WO 2011/030469 A1

### SUMMARY OF THE INVENTION

### PROBLEM TO BE SOLVED BY THE INVENTION

However, in a system disclosed in Patent Document 1, an enormous amount of time is required to derive an optimal solution, since a full-combination search is performed on a workload unit basis. Further, this is not a method in which the search focuses primarily on achieving power savings on the electrical power and cooling equipment side, and therefore, it is difficult to derive the optimal solution for power savings from the perspectives of the electrical power equipment and the cooling equipment. On the other hand, in a system disclosed in Patent Document 2, although the full-combination search is not necessary, power-saving operations on the electrical power and cooling equipment side are performed after the electrical power distribution and temporal variation of a group of information processing devices are detected, and therefore, the power-saving operations led by the electrical power and cooling equipment are not performed.

The present invention has been made to solve the above problem, and an object of the present invention is to provide an information processing system that maximizes power-saving effects by assigning workloads to the information processing devices on the basis of an amount of electric power at which efficiency is maximized on the electrical power and cooling equipment side.

### MEANS TO SOLVE THE PROBLEM

The present invention is directed to an information processing system which includes electrical power equipment that supplies power to information processing devices in a server room and cooling equipment that cools the server room, and the information processing system includes a first control unit that controls the information processing devices and a second control unit that controls the electrical power equipment and the cooling equipment, wherein the second control unit calculates a predicted value of an increase in power consumption of each of equipment groups configured by combining a plurality of the information processing devices, a plurality of pieces of the electrical power equipment, and a plurality of pieces of the cooling equipment according to an arrangement in the server room, on the basis of operational information of the electrical power equipment and the cooling equipment that are operating; among information processing devices that satisfy a processing condition for assigning a new job, the first control unit selects an information processing device that incurs a smallest increase in power consumption; and among equipment groups including the selected information processing device, the new job is assigned to an equipment group that incurs a smallest increase in power consumption resulting from an increase in power of the selected information processing device.

In addition, the present invention is directed to an information processing system which includes electrical power equipment that supplies power to information processing devices in a server room and cooling equipment that cools the server room, and the information processing system includes a first control unit that controls the information processing devices and a second control unit that controls the electrical power equipment and the cooling equipment, wherein equipment groups are configured by selecting and combining a plurality of the information processing devices, a plurality of pieces of the electrical power equipment, and a plurality of pieces of the cooling equipment according to an arrangement in the server room; the second control unit calculates an amount of increase in power consumption of each of the equipment groups, on the basis of a predetermined CPU utilization rate of each information processing device; and the first control unit is controlled such that a job is moved to an information processing device in an equipment group that incurs a smallest increase in power consumption.

In addition, the present invention is directed to an information processing system which includes electrical power equipment that supplies power to information processing devices in a server room and cooling equipment that cools the server room, and the information processing system includes a first control unit that controls the information processing devices and a second control unit that controls the electrical power equipment and the cooling equipment, wherein equipment groups are configured by selecting and combining a plurality of the information processing devices, a plurality of pieces of the electrical power equipment, and a plurality of pieces of the cooling equipment according to an arrangement in the server room; the second control unit calculates the amount of increase in power consumption of each of the equipment groups, on the basis of operational information of the electrical power equipment and the cooling equipment that are operating; and the first control unit is controlled such that a job is moved to an information processing device in an equipment group that incurs a smallest increase in power consumption.

### EFFECT OF THE INVENTION

According to the present invention, the information system can maximize power-saving effects by assigning workloads to the information processing devices on the basis of an amount of electric power at which efficiency is maximized on the electrical power and cooling equipment side.

### BRIEF DESCRIPTION OF THE DRAWINGS.

FIG. 1 is a block configuration diagram of an information processing system according to Embodiment 1.
FIG. 2 shows an example of hardware of each of a first control unit, a second control unit, and a coordination unit in the information processing system according to Embodiment 1.
FIG. 3 is a functional block diagram including the first control unit, the second control unit, and the coordination unit in the information processing system according to Embodiment 1.
FIG. 4 shows an example of an arrangement inside a server room and an arrangement of electrical power equipment and cooling equipment in the information processing system according to Embodiment 1.
FIG. 5 is a flowchart illustrating job assignment in the information processing system according to Embodiment 1.
FIG. 6 shows an example of an arrangement of equipment groups in the information processing system according to Embodiment 1.
FIG. 7 shows, for each of information processing devices included in the information processing system according to Embodiment 1, the power-consumption increase amount of each equipment group corresponding to the power increase amount of the information processing device.
FIG. 8 illustrates the selection of an equipment group when a job is assigned to an information processing device included in the information processing system according to Embodiment 1.
FIG. 9 illustrates the cooling efficiency of racks in the information processing system according to Embodiment 1.
FIG. 10 illustrates the cooling efficiency of the information processing devices in the information processing system according to Embodiment 1.
FIG. 11 shows a connection configuration of the electrical power equipment and the cooling equipment in the information processing system according to Embodiment 1.
FIG. 12 shows a connection configuration of the electrical power equipment and the cooling equipment in the information processing system according to Embodiment 1.
FIG. 13 shows a connection configuration of the electrical power equipment and the cooling equipment in the information processing system according to Embodiment 1.
FIG. 14 shows a connection configuration of the electrical power equipment and the cooling equipment in the information processing system according to Embodiment 1.
FIG. 15 shows a connection configuration of the electrical power equipment and the cooling equipment in the information processing system according to Embodiment 1.
FIG. 16 shows a connection configuration of the electrical power equipment and the cooling equipment in the information processing system according to Embodiment 1.
FIG. 17 shows a connection configuration of the electrical power equipment and the cooling equipment in the information processing system according to Embodiment 1.
FIG. 18 illustrates a spatial arrangement of the cooling equipment in the information processing system according to Embodiment 1.
FIG. 19 illustrates a spatial arrangement of the cooling equipment in the information processing system according to Embodiment 1.
FIG. 20 illustrates a spatial arrangement of the cooling equipment in the information processing system according to Embodiment 1.
FIG. 21 illustrates a spatial arrangement of the cooling equipment in the information processing system according to Embodiment 1.
FIG. 22 is a flowchart illustrating job consolidation in an information processing system according to Embodiment 2.
FIG. 23 is a functional block diagram including the first control unit, the second control unit, and the coordination unit in each of the information processing system according to embodiments 2 and an information processing system according to Embodiment 3.
FIG. 24 shows an equipment group for illustrating job consolidation in the information processing system according to Embodiment 2.
FIG. 25 shows the relationship between the power consumption of each rack, and a target value therefor and an upper limit value therefor in the information processing system according to Embodiment 2.
FIG. 26 illustrates execution of live migration between information processing devices in the information processing system according to Embodiment 2.
FIG. 27 is a flowchart illustrating job consolidation in the information processing system according to Embodiment 3.
FIG. 28 shows the relationship between the power consumption of each equipment group, and a target value therefor and an upper limit value therefor in the information processing system according to Embodiment 2.
FIG. 29 illustrates execution of live migration between the information processing devices in the information processing system according to Embodiment 3.
FIG. 30 illustrates an effect of job consolidation in the information processing system according to Embodiment 3.
FIG. 31 is a flowchart illustrating job consolidation in an information processing system according to Embodiment 4.
FIG. 32 is a functional block diagram including the first control unit, the second control unit, and the coordination unit in the information processing system according to Embodiment 4.
FIG. 33 illustrates the relationship between the number of running information processing devices and the amount of increase in power consumption in the information processing system according to Embodiment 4.
FIG. 34 illustrates execution of live migration in the information processing system according to Embodiment 4.

### DESCRIPTION OF EMBODIMENTS

Hereinafter, preferred embodiments of an information processing system according to the present invention will be described with reference to the drawings. The same features and corresponding parts are denoted by the same reference characters, and the detailed description thereof is omitted. Also, in other embodiments, components denoted by the same reference characters will not be described repeatedly.

### Embodiment 1

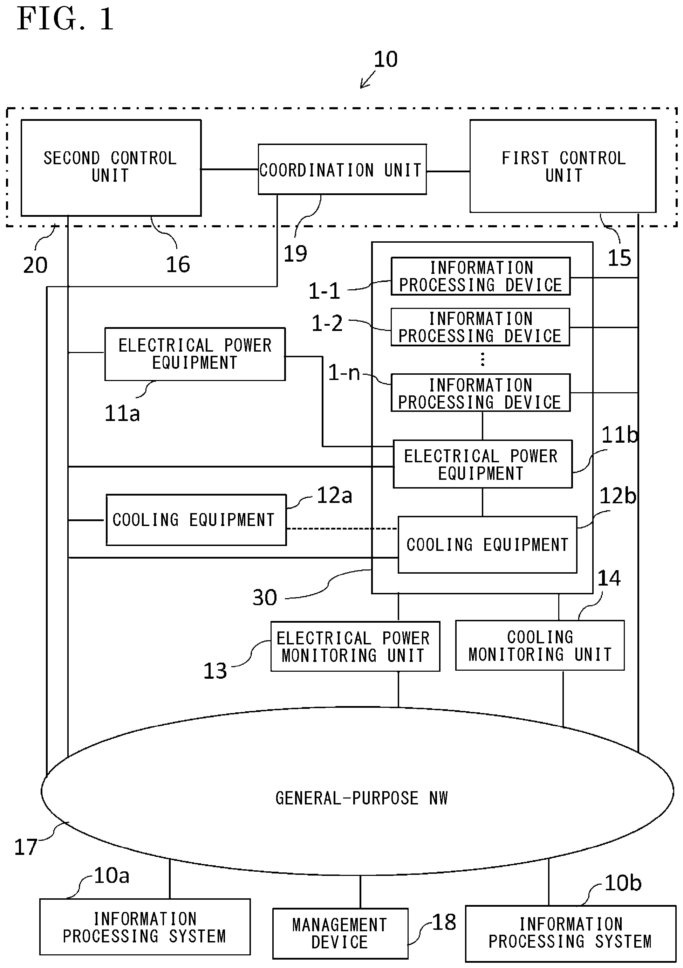

FIG. 1 is a block configuration diagram of an information processing system 10 according to Embodiment 1. The information processing system 10 includes information processing devices 1-1 to 1-n, electrical power equipment 11a, 11b that supplies power to the information processing devices 1-1 to 1-n, cooling equipment 12a, 12b that cools the information processing devices 1-1 to 1-n, and an operation management device 20 that manages the information processing devices 1-1 to 1-n, the electrical power equipment 11a, 11b, and the cooling equipment 12a, 12b.

Jobs, which are workloads, are assigned to the information processing devices 1-1 to 1-n. A job refers to a unit of work that gives an instruction to the information processing device, and an example thereof is "browsing a website". For the information processing devices 1-1 to 1-n, one job may be assigned, multiple jobs may be assigned, or no job may be assigned.

The operation management device 20 includes a first control unit 15, a second control unit 16, and a coordination unit 19 that coordinates the first control unit 15 and the second control unit 16. The first control unit 15 is connected to the information processing devices 1-1 to 1-n. The first control unit 15 has the location and operating information of each of the information processing devices 1-1 to 1-n and calculates the power consumption of each of the information processing devices 1-1 to 1-n. In addition, the first control unit 15 assigns jobs to the information processing devices 1-1 to 1-n. Further, the first control unit 15 may execute live migration described below. The second control unit 16 calculates the power losses of the electrical power equipment 11a, 11b and the cooling power of the cooling equipment 12a, 12b.

The information processing devices 1-1 to 1-n, the electrical power equipment 11b, and the cooling equipment 12b are installed inside a server room 30. An electrical power monitoring unit 13 collects electrical power information in the server room 30 and the operational data of the electrical power equipment, and a cooling monitoring unit 14 collects temperature information in the server room 30 and the operational data of the cooling equipment. The data from the electrical power monitoring unit 13 and the cooling monitoring unit 14 are transmitted to the first control unit 15 and the second control unit 16 via a general-purpose network (hereinafter, general-purpose NW) 17.

A management device 18, which displays information on the electrical power monitoring unit 13 and the cooling monitoring unit 14 and information on the first control unit 15 and the second control unit 16, may be connected to the general-purpose NW 17. The management device 18 is configured, for example, from a computer and a display. The management device 18 extracts data from a plurality of information processing systems 10, 10a, 10b connected to the general-purpose NW 17, analyzes and displays transitions, trends, and the like in the power-saving states of the information processing systems, and also accumulates these data. The accumulated data, such as the arrangements of the information processing devices, the electrical power equipment, and the cooling equipment, and the priorities of pieces of equipment for power reduction, are shared when the information processing system is expanded in the future, so that a power-saving information processing system can be obtained more efficiently.

Each of the information processing devices 1-1 to 1-n may be a server device, a storage device, a network (NW) device, or the like. Examples of the server device include a general-purpose server, a dedicated server, a mainframe, a parallel computer, a supercomputer, an embedded computer, and a personal computer. Examples of the storage device include a magnetic disk, a solid state disk, an optical disk, and a tape. Examples of the NW device include a router, a switch, and a hub. Further, peripheral devices such a printer, a copying machine, a modem, and a display are also included. The information processing devices 1-1 to 1-n are housed in a plurality of racks 101.

The electrical power equipment 11a is installed outside the server room 30, and examples of the electrical power equipment 11a include a transformer, an uninterruptible power supply (UPS), an air circuit breaker (ACB), a molded case circuit breaker (MCCB), a miniature circuit breaker (MCB), and a vacuum circuit breaker (VCB). The electrical power equipment 11b is installed inside the server room 30, and examples of the electrical power equipment 11b include a distribution panel, a sub-distribution panel, an incoming panel, a direct digital controller (DDC), and power supplies for the racks 101 in which the information processing devices 1-1 to 1-n are mounted. However, the classification of the types of the electrical power equipment 11a, 11b is not limited thereto. Three-phase power of the U, V, and W phases is supplied to the information processing devices 1-1 to 1-n via the electrical power equipment 11a, 11b.

The cooling equipment 12a is installed outside the server room 30, and examples of the cooling equipment 12a include a refrigeration unit, a cooling tower, an air supply and exhaust vent, a fan, a duct, refrigerant piping, a liquid cooling device, a power control panel, and an air handling unit (AHU). The cooling equipment 12b is installed inside the server room 30, and examples of the cooling equipment 12b include an air handling unit (AHU), an air supply and exhaust vent, a fan, a duct, refrigerant piping, a direct digital controller (DDC), a variable air volume control device (VAV), a multi remote controller, a chiller, and fan-coil rack rows or localized cooling units installed at the front or rear of the racks. However, the classification of the types of the cooling equipment 12a, 12b is not limited thereto.

The electrical power monitoring unit 13 includes, for example, a power sensor, a current/voltage sensor, and an electrical leakage sensor which are installed inside or outside the server room 30. The cooling monitoring unit 14 includes, for example, a temperature sensor, a humidity sensor, and a flow rate and flow direction sensor which are installed inside or outside the server room 30.

The first control unit 15 is configured using a computer, and the second control unit is configured using a computer or a programmable logic controller (PLC). The control method can be implemented as software such as middleware, an application, embedded control software, and firmware. The coordination unit 19 coordinates control performed by the first control unit 15 and control performed by the second control unit 16.

The coordination unit 19 selects and receives, from the second control unit 16, information necessary for the first control unit 15 to perform control, such as operational information and power consumption, and selects and receives, from the first control unit 15, information necessary for the second control unit 16 to perform control, such as consolidation target values, live migration groups, and migration-feasibility information. Further, the coordination unit 19 may determine whether transmission or reception by each of the control units 15, 16 is necessary. The functions of the coordination unit 19 may be implemented in the first control unit 15 or the second control unit 16, or the coordination unit 19 may be newly configured using a computer, PLC, or the like.

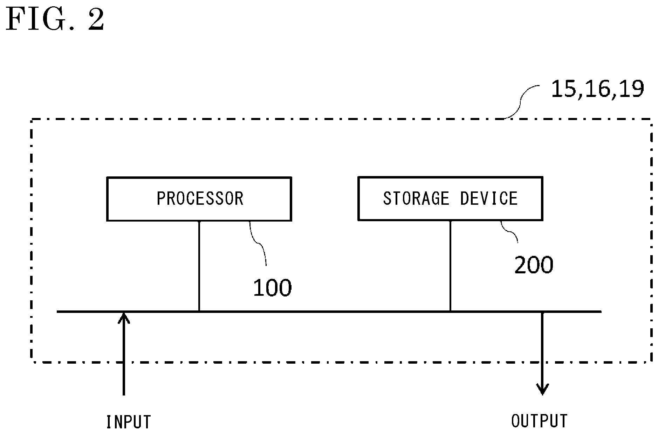

An example of hardware of each of the first control unit 15, the second control unit 16, and the coordination unit 19 is shown in FIG. 2. Each device is composed of a processor 100 and a storage device 200. Although not shown, the storage device includes a volatile storage device such as a random access memory, and a nonvolatile auxiliary storage device such as a flash memory. The storage device may include an auxiliary storage device such as a hard disk, instead of a flash memory. The processor 100 executes a program inputted from the storage device 200 to perform the control described below.

The program is inputted from the auxiliary storage device to the processor 100 via the volatile storage device. The processor 100 may output data such as a calculation result to the volatile storage device of the storage device 200, or may store such data in the auxiliary storage device via the volatile storage device. Input and output of data to/from the processor 100 and the storage device 200 may be performed via wired or wireless communication, and a transmission/reception device may be provided for such input/output.

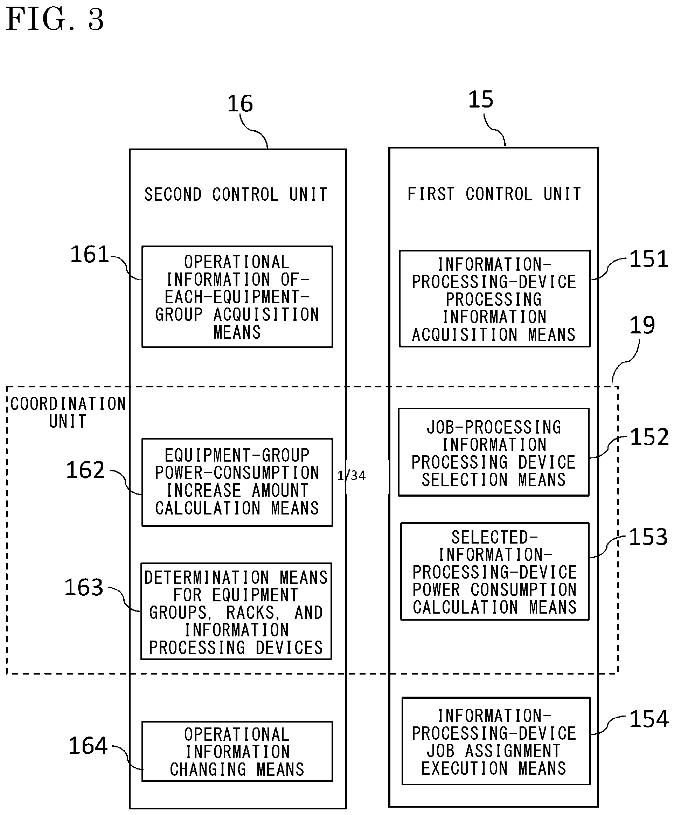

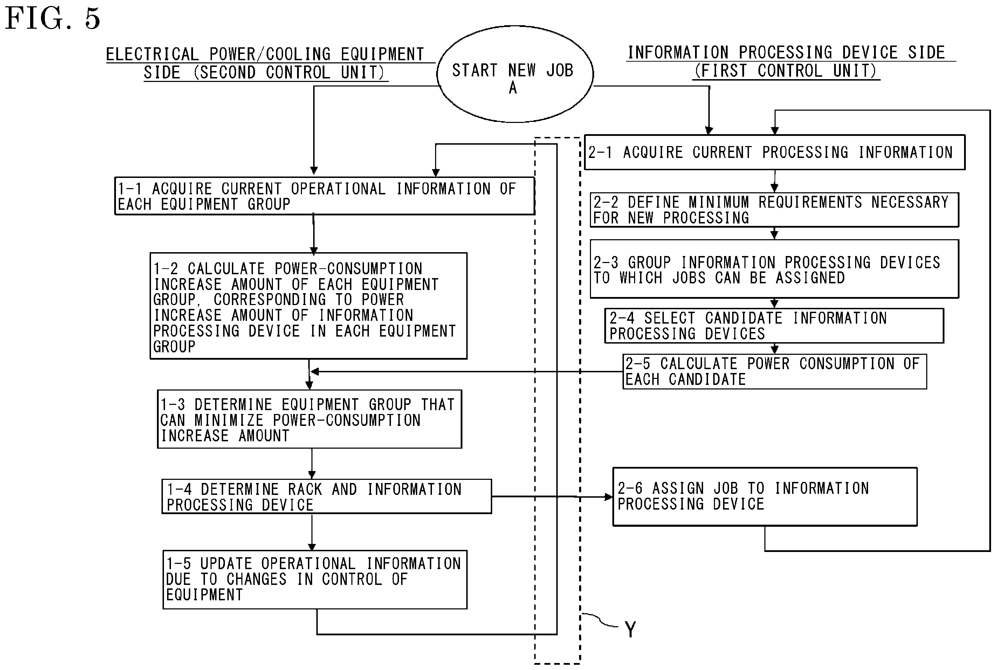

FIG. 3 shows an example of a functional block diagram including the first control unit 15, the second control unit 16, and the coordination unit 19 according to Embodiment 1. Means 151 to 154 and 161 to 164 shown in FIG. 3 represent examples of the functions that are performed by the control units. These may each be implemented as hardware or by a program. The coordination unit 19 manages the coordination of information between the means 152, 153 of the first control unit 15 and the means 162, 163 of the second control unit. FIG. 3 will be described below together with the description of FIG. 5.

Devices in the server room 30, the electrical power equipment 11a, 11b, the cooling equipment 12a, 12b, the electrical power monitoring unit 13, the cooling monitoring unit 14, the first control unit 15, the second control unit 16, and the coordination unit 19 are each equipped with a transmission/reception device, and transmit and receive various information such as control information, electrical power information, and temperature information to/from target devices via the general-purpose NW 17, so that the control shown in the control flow in each of FIG. 5, FIG. 22, FIG. 27, and FIG. 31 described below is executed. The management device 18 is configured, for example, from a computer and a display. The management device 18 may extract data from the plurality of information processing systems 10, 10a, 10b connected to the general-purpose NW 17, and analyze and display transitions, trends, and the like in the power-saving states of the information processing systems.

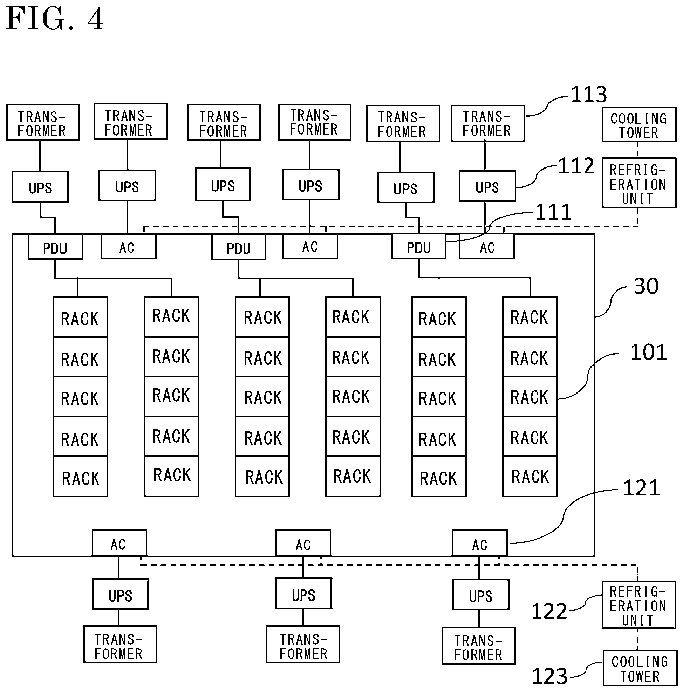

FIG. 4 shows an example of a connection arrangement of the electrical power equipment 11a, 11b and the cooling equipment 12a, 12b which are installed inside or outside the server room 30. In FIG. 4, the server room 30 is viewed from above. The plurality of racks 101 (thirty racks in FIG. 4) are installed inside the server room 30, and the information processing devices are housed in each of the racks 101. In order to supply power to each information processing device, several racks 101 are grouped together and connected to each of PDUs 111. Each PDU 111 is connected to a transformer 113 via a UPS 112.

A plurality of air-conditioning units 121 (three air-conditioning units in FIG. 4) are installed on each of walls facing each other of the server room 30, and are capable of cooling all the racks 101. Since the air-conditioning units 121 also require electric power, each of the air-conditioning units 121 is connected to the transformer 113 via the UPS 112. Further, the air-conditioning units 121 are connected by refrigerant piping to refrigeration units 122 for cooling, and each of the refrigeration units 122 is connected to a cooling tower 123 that produces a refrigerant. Hereinafter, the operation of the information processing system 10 including the information processing devices, the electrical power equipment 11a, 11b, and the cooling equipment 12a, 12b, which are arranged as shown in FIG. 4, will be described with respect to job assignment and job consolidation.

### <Assignment of new job>

FIG. 5 is used to describe which information processing device a new job A is assigned to when the new job A is started in the information processing system. FIG. 5 illustrates the sequence of control performed by the first control unit 15 on the information processing device side and the sequence of control performed by the second control unit 16 on the electrical power and cooling equipment side, when the job A is assigned. The right side of the drawing sheet shows the sequence of control on the information processing device side, and the control is performed by the first control unit 15. The left side of the drawing sheet shows the sequence of control on the electrical power and cooling equipment side, and the control is performed by the second control unit 16.

The coordination unit 19, for example, coordinates the exchange of information corresponding to arrows passing through a region Y indicated by a broken line between the "electrical power/cooling equipment side" and the "information processing device side" in FIG. 5. Specifically, the coordination unit 19 performs management such that the coordination of information between the first control unit 15 and the second control unit 16 (the arrow from the "electrical power/cooling equipment side" to the "information processing device side" and the arrow from the "information processing device side" to the "electrical power/cooling equipment side" in FIG. 5) proceeds smoothly.

The sequence of control performed by the second control unit 16 on the electrical power and cooling equipment side will be described. First, equipment groups are determined (1-1 in FIG. 5). An equipment group is a unit group used when power consumption on the equipment side is calculated, and is determined by the physical arrangement of the electrical power equipment 11a, 11b and the cooling equipment 12a, 12b which are mutually related.

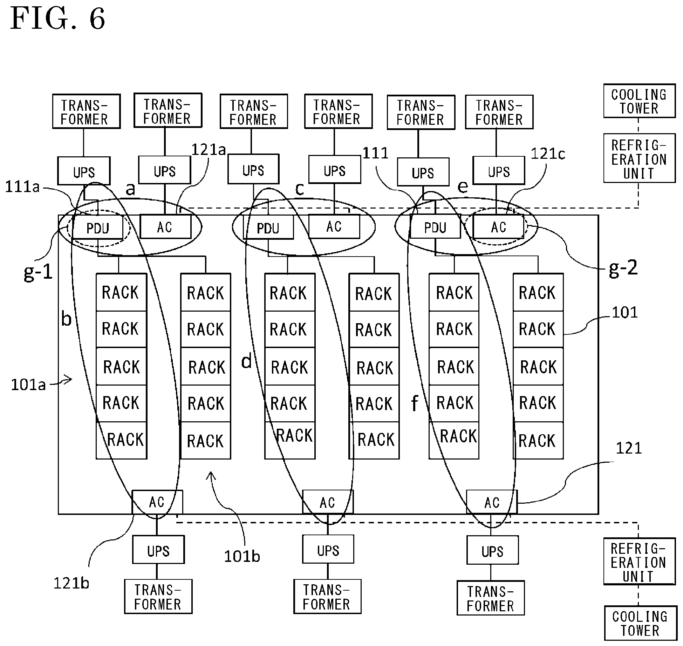

For example, FIG. 6 shows an example of equipment groups determined from the viewpoint of cooling air flows, on the basis of the arrangement of the PDUs 111 and the air-conditioning units 121 in the server room 30 in FIG. 4. In FIG. 6, equipment groups a to f indicated by elliptical regions enclosed by solid lines can be considered. For example, an air-conditioning unit 121a in the equipment group a cools a PDU 111a as well as five racks 101a in the leftmost row and five racks 101b in the second row from the left in the server room 30.

An air-conditioning unit 121b in the equipment group b cools the PDU 111a as well as the five racks 101a in the leftmost row in the server room 30. In a case where the server room 30 employs an underfloor air-supply cooling system, in which cooling air of an air-conditioning unit 121c flows through an underfloor space and is discharged from the underfloor space in the vicinity of the PDU 111a, it is also possible to consider an equipment group g composed of elliptical regions indicated by a broken line g-1 + a broken line g-2. The PDU 111a and the air-conditioning unit 121a in the equipment group a are connected to UPSs and transformers outside the server room 30, and these devices may also be included in the group. The same applies to the other equipment groups.

For each of a plurality of the determined equipment groups a to g, the current operational information of the cooling equipment 12a, 12b and the electrical power equipment 11a, 11b is acquired from the electrical power monitoring unit 13, the cooling monitoring unit 14, and the like (means 161 in FIG. 3, 1-1 in FIG. 5). The operational information of the cooling equipment includes, for example, cooling efficiency curves of air-conditioning units such as AHUs, cooling efficiency curves of refrigeration units, cooling efficiency curves of cooling towers, and cooling efficiency in the server room 30. The operational information of the electrical power equipment includes, for example, conversion efficiencies of UPSs and transformers for the U, V, and W phases, three-phase load imbalance losses, and wiring losses.

Next, on the basis of the current operational information, a predicted value of a power-consumption increases amount y of the electrical power equipment and the cooling equipment in each equipment group, corresponding to a power increase amount x of any information processing device, is calculated (means 162 in FIG. 3, 1-2 in FIG. 5). The power-consumption increase amount y can be expressed by the following Equation (1). $y = {ζ}_{electric , i} \left(x\right) + {ζ}_{aircon , i} \left(x\right)$

In Equation (1), ζ_{electric} represents the amount of increase in the power consumption of the electrical power equipment, which results from the power increase amount x of the information processing device, and is calculated on the basis of any one or a combination of the conversion loss of a transformer for the U, V, and W phases, the conversion loss of a UPS, three-phase load imbalance losses, wiring losses, and the like, which have been acquired as operational information. ζ_{aircon} represents the amount of increase in the power consumption of the cooling equipment, which results from the power increase amount x of the information processing device, and is calculated on the basis of any one or a combination of the power consumption of an air-conditioning unit, the power consumption of a refrigeration unit, the power consumption of a cooling tower, cooling efficiency in the server room, and the like, which have been acquired as operational information. i indicates a number (count) assigned to each of the information processing devices in the equipment group (cooling efficiency loss).

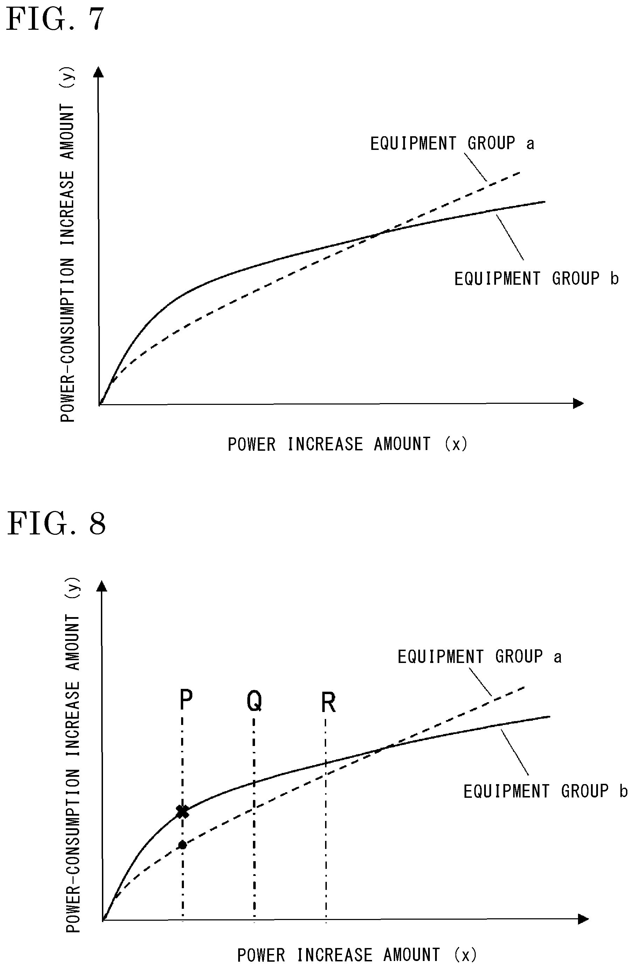

FIG. 7 shows the relationship between the power increase amount x and the power-consumption increase amount y, which is calculated by Equation (1). This indicates how much the power consumption of each equipment group increases as a result of the power increase that occurs when a specific information processing device starts running. Instead of using the power increase amount, an amount of power including the power increase amount may be used, and instead of using the power-consumption increase amount, an amount of power consumption including the power-consumption increase amount may be used. Then, the relationship may be shown in terms of the amount of power and the amount of power consumption.

Meanwhile, in the first control unit 15 on the information processing device side, current processing information of the information processing devices in each equipment group is acquired (means 151 in FIG. 3, 2-1 in FIG. 5). This processing information includes the type of CPU, clock frequency, the number of cores, a communication environment, and the like for each information processing device. Then, when a new job A is processed, the minimum requirements are determined with respect to the present workload state (e.g., a running state, an idle state, or a stopped state) of the CPU of each information processing device, the clock frequency necessary for processing, the number of cores, the communication environment, and the like (2-2 in FIG. 5).

On the basis of the minimum requirements, information processing devices capable of processing the job A are selected as candidates, for example, as candidates P, Q, R. The candidates P, Q, R have, for example, similar specifications in terms of network specifications or information processing device specifications (means 152 in FIG. 3, 2-3, 2-4 in FIG. 5). The first control unit 15 calculates the power consumption of each of the candidates P, Q, R (means 153 in FIG. 3, 2-5 in FIG. 5), and as shown in FIG. 8, the second control unit 16 selects, from among the candidates P, Q, R, the candidate P whose power-consumption increase amount corresponding to the power increase amount is the smallest.

When information processing devices corresponding to the candidate P are present in both the equipment groups a, b, that is, when information processing devices that correspond to the candidate P capable of processing the job A and have the same clock frequency, the same number of cores, the same communication environment, and the like are present in both the equipment groups a, b, as shown in FIG. 8, the second control unit 16 compares a power-consumption increase amount (•) of the equipment group a with a power-consumption increase amount (×) of the equipment group b on the basis of a power increase amount that occurs when the candidate P processes the job A, and determines that the processing is to be performed in the equipment group a that can minimize the power-consumption increase amount (means 163 in FIG. 3, 1-3 in FIG. 5). It is also possible to select an equipment group whose power consumption is the smallest when the power consumption of each candidate information processing device is included in the power-consumption increase amount (y).

If a plurality of the information processing devices corresponding to the candidate P are present in the equipment group a, as determined by the second control unit 16, for example, if an information processing device corresponding to the candidate P is present in each of racks 1 to 3, the second control unit 16 calculates the cooling efficiency of each information processing device corresponding to the candidate P and the cooling efficiency of each rack in which the information processing device corresponding to the candidate P is stored, and finally determines the information processing device that will perform the processing (means 163 in FIG. 3, 1-4 in FIG. 5). That is, the second control unit 16 determines, from among the plurality of candidate information processing devices in the equipment group, the rack and the position of the information processing device that minimizes equipment efficiency (cooling efficiency loss).

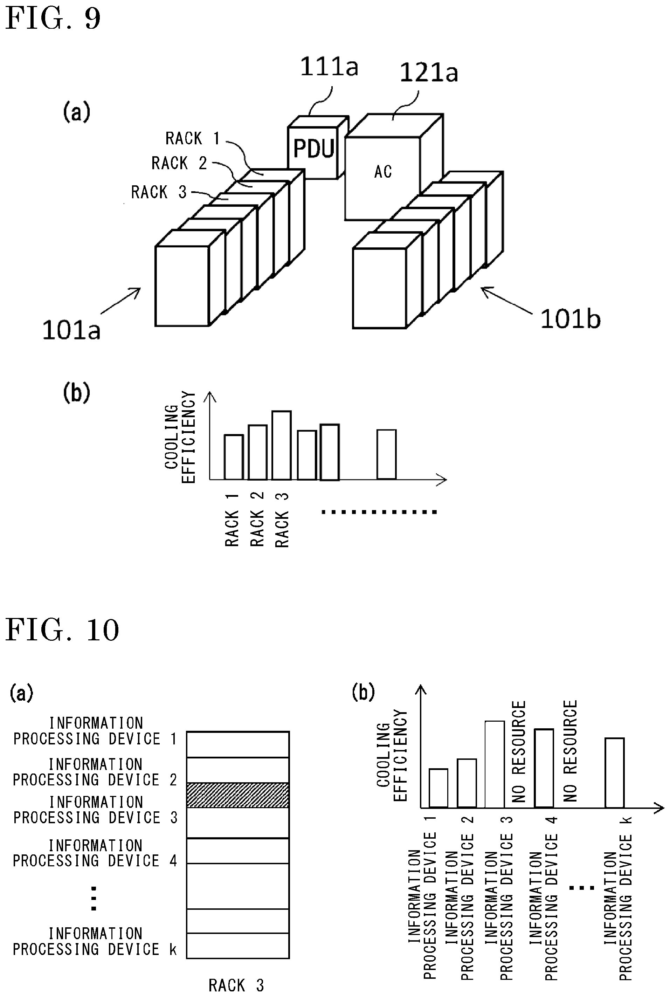

First, the cooling efficiency of the rack in which the information processing device corresponding to the candidate P is stored will be described. FIG. 9(a) is a perspective view of the equipment group a in FIG. 6. A cooling efficiency γ_{rack} for each of racks 101a, 101b corresponding to the PDU 111a and the air-conditioning unit 121a is calculated, for example, as the sum of an air delivery loss γₐᵢᵣ from the air-conditioning unit 121a and an airflow loss γ_{flow_rack} around each of the racks 101a, 101b, as in Equation (2). Since the cooling efficiency is expressed in terms of the magnitude of the loss, a smaller calculated value γ_{rack} indicates higher cooling efficiency. ${γ}_{rack} = {γ}_{air} + {γ}_{flow_rack}$

When the calculated cooling efficiency of each rack is expressed in a graph in FIG. 9(b), the rack 3 exhibits the highest cooling efficiency. Thus, the rack 3 is selected (means 163 in FIG. 3, 1-4 in FIG. 5).

Assuming that all information processing devices in the rack 3 shown in FIG. 10(a) satisfy the minimum requirements as the information processing devices corresponding to the candidate P, a cooling efficiency γₛₑᵣᵥₑᵣ for each of the information processing devices is calculated, for example, as the sum of the air delivery loss γₐᵢᵣ from the air-conditioning unit 121a and the airflow loss γ_{flow_serv} around each of the information processing devices, as in Equation (3). Since the cooling efficiency is expressed in terms of the magnitude of the loss, a smaller calculated value γₛₑᵣᵥₑᵣ indicates higher cooling efficiency. ${γ}_{server} = {γ}_{air} + {γ}_{flow_serv}$

When the calculated cooling efficiency of each information processing device is expressed in a graph in FIG. 10(b), the information processing device 3 exhibits the highest cooling efficiency. Thus, it is determined that the information processing device 3 in the rack 3 is selected as an information processing device that will process a job A (means 163 in FIG. 3, 1-4 in FIG. 5).

The first control unit 15 assigns the job A to the information processing device 3 in the rack 3 (means 154 in FIG. 3, 2-6 in FIG. 5). In addition, changes occur in the control of the electrical power equipment 11a, 11b and the cooling equipment 12a, 12b due to the assignment of the job A, and thus, the changes are fed back into the operational information (means 164 in FIG. 3, 1-5 in FIG. 5).

As described above, in the information processing system of Embodiment 1, it is possible to suppress an increase in the power consumption of the electrical power and cooling equipment and achieve highly energy-efficient information processing, by assigning a job to an information processing device in an equipment group that can minimize power consumption, on the basis of the amount of increase in the power consumption of electrical power and cooling equipment in each equipment group.

### <Other connection configurations of electrical power equipment and cooling equipment>

Various connection configurations of the electrical power and cooling equipment arrangement, in addition to the configuration described above with reference to FIG. 4, can be considered, and a power-consumption increase amount in Equation (1) also varies depending on the connection configuration. Examples of possible connection configurations of the electrical power and cooling equipment arrangement are listed.

### Connection configuration 1

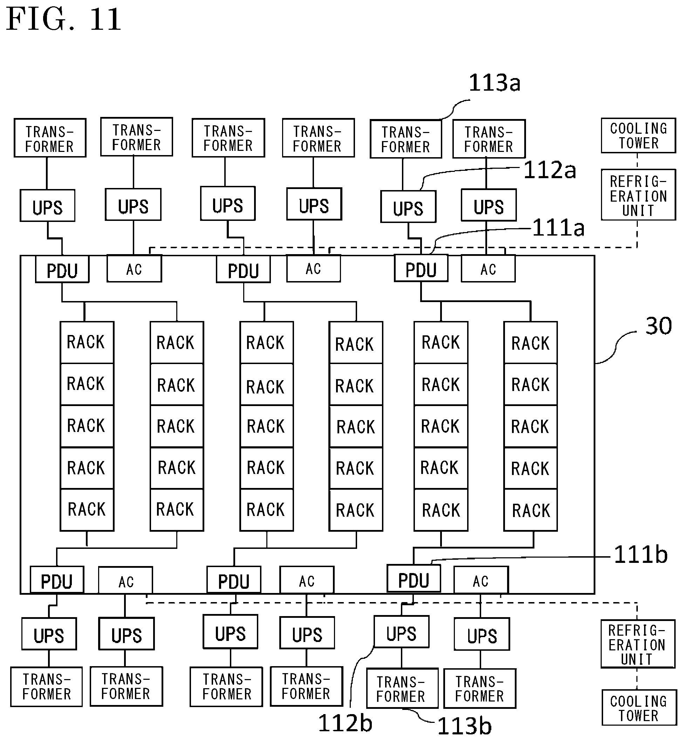

Compared with FIG. 3, in FIG. 11, one additional system including a PDU 111b, a UPS 112b and a transformer 113b is arranged along with a PDU 111a, a UPS 112a, and a transformer 113a connected to racks, in order to provide redundancy in electrical power equipment. Thus, the conversion losses of transformers for the U, V, and W phases, the conversion losses of UPSs, three-phase load imbalance losses, and wiring losses may increase. However, this configuration makes it possible to increase the number of equipment groups.

### Connection configuration 2

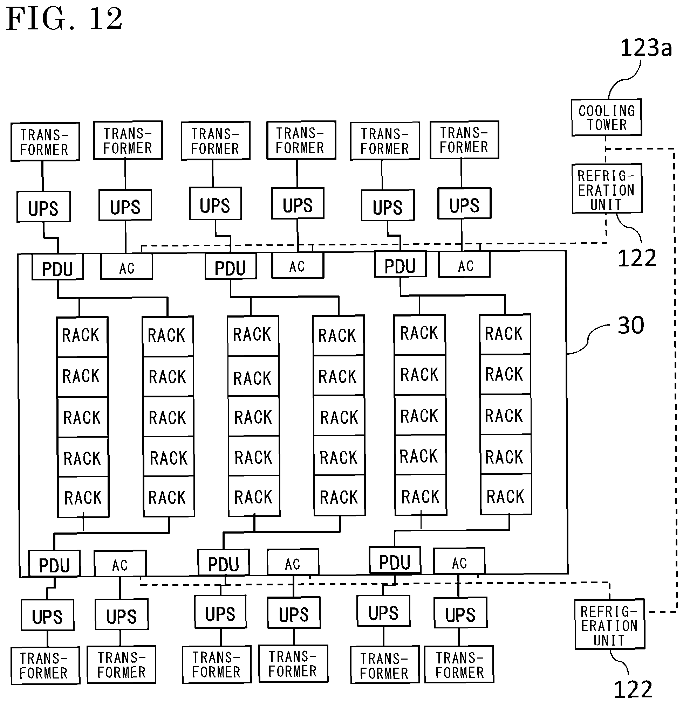

Compared with FIG. 3, in FIG. 12, one cooling tower 123a is provided for one server room 30, and the cooling tower 123a is connected to refrigeration units 122 to supply refrigerant (water). Due to this connection, when jobs are processed within each server room (when job processing is not assigned across server rooms), it is unnecessary to consider the power consumption of the cooling tower 123a for equipment groups in the same server room.

### Connection configuration 3

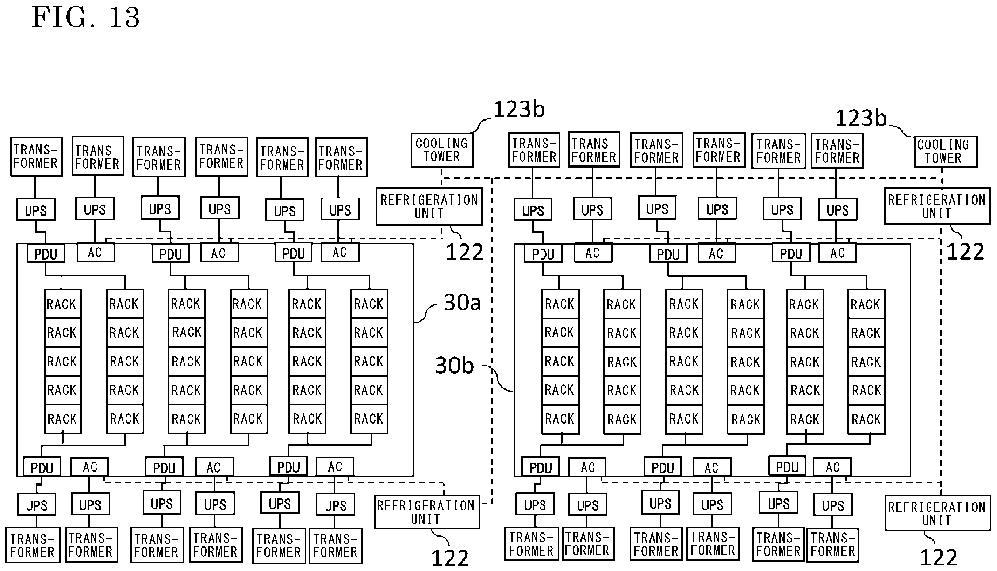

Compared with FIG. 12, in FIG. 13, cooling towers 123b are connected in parallel across a plurality of server rooms 30a, 30b, and the cooling towers 123b are connected to refrigeration units 122 to supply refrigerant. Due to this connection, even when job processing is assigned across the server rooms, the power consumption of the cooling towers 123b for each equipment group is the same, and thus it is unnecessary to consider the power consumption.

### Connection configuration 4

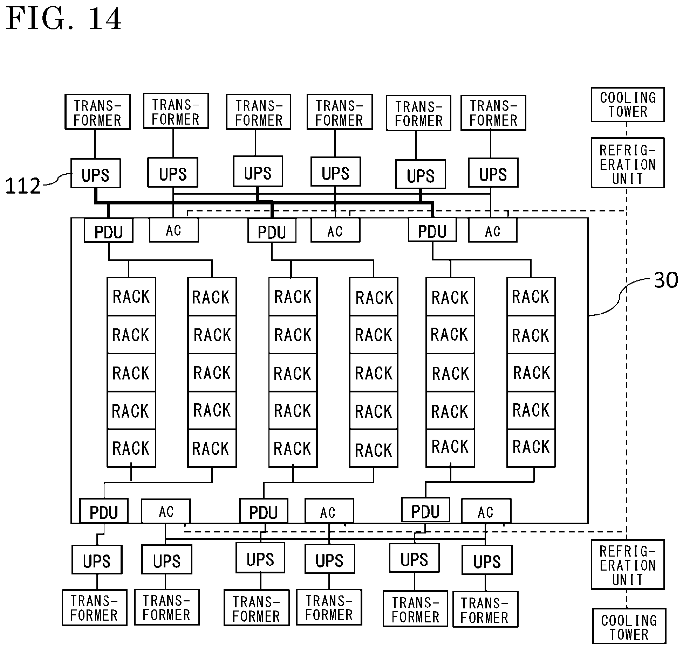

In FIG. 14, as indicated by bold lines downstream of UPSs 112, the UPSs 112 are connected in parallel and are connected to PDUs 111 that supply power to racks. Thus, when jobs are processed within the server room 30, that is, when job processing is not assigned across server rooms, the conversion losses of the UPSs for the U, V, and W phases are the same in terms of the power consumption of the equipment groups including the UPSs, and thus, it is unnecessary to consider such losses.

### Connection configuration 5

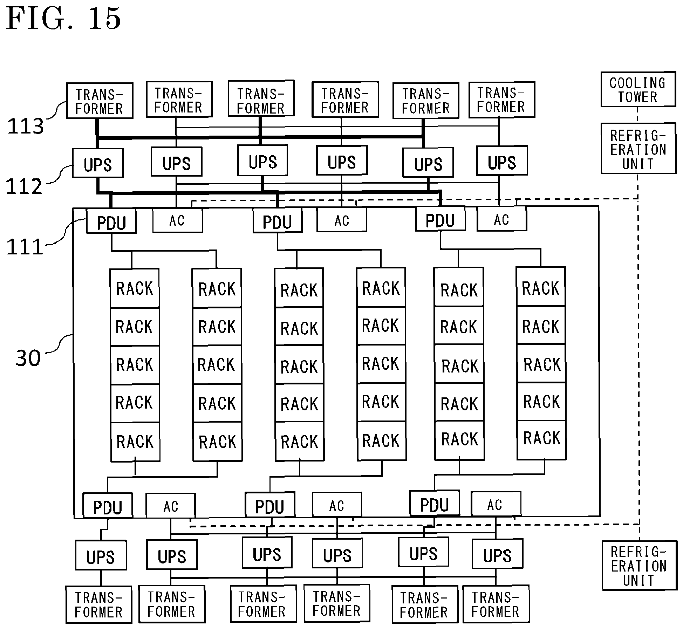

In FIG. 15, the downstream sides of the UPSs 112 connected to the PDUs 111 that supply power to racks are connected in parallel, and, in addition, transformers 113 connected to the parallel-connected UPSs 112 are also connected in parallel. Thus, the conversion losses of the transformers and the UPSs for U, V, and W phases are the same in terms of the power consumption of the equipment groups including the UPSs and the transformers, and thus, it is unnecessary to consider such losses.

### Connection configurations 6 and 7

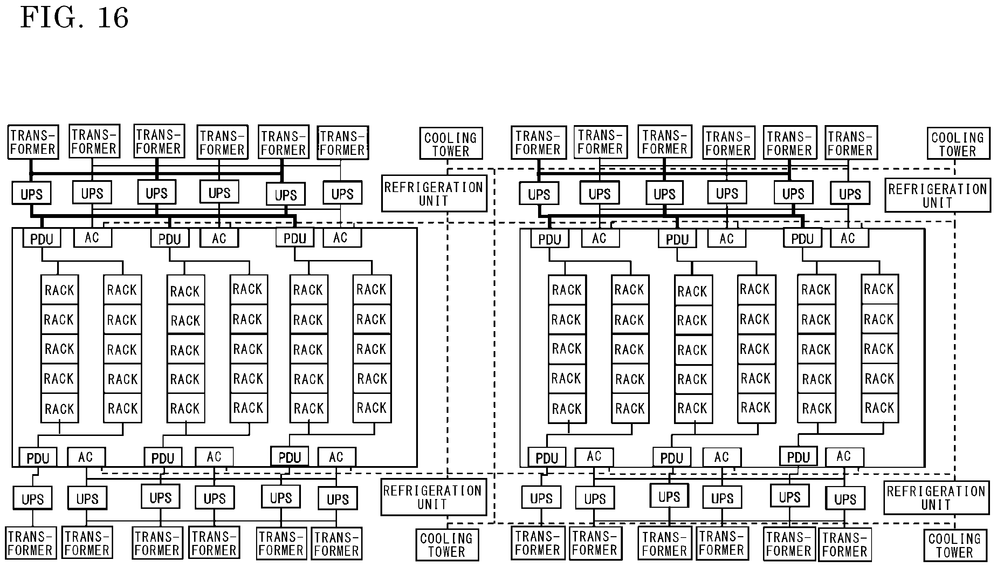

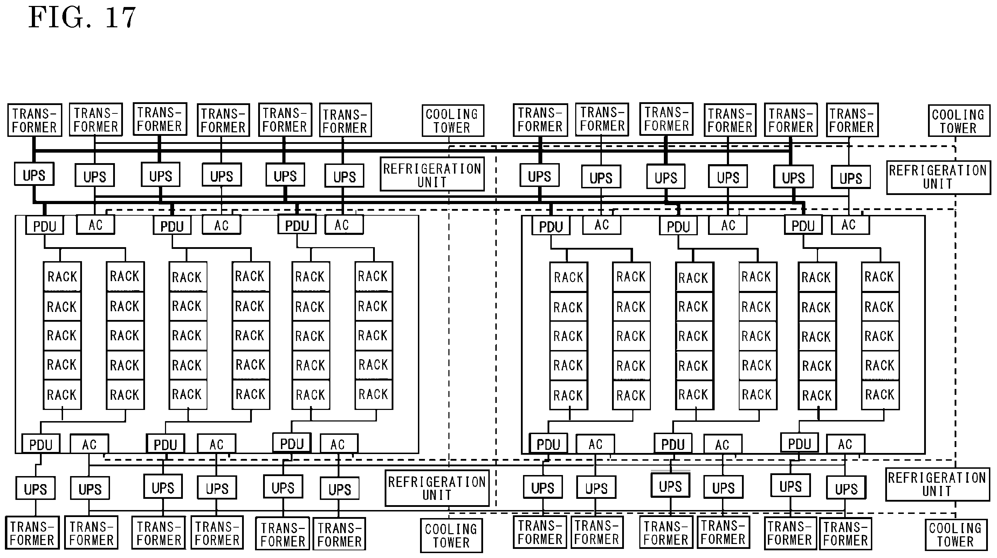

FIG. 16 shows an arrangement configuration in which the connection configuration 5 and the connection configuration 3 are combined. Further, in FIG. 17, transformers and UPSs are connected in parallel across multiple servers, and thus it is unnecessary to consider the conversion losses of the transformers and the UPSs for the U, V, and W phases in equipment groups that use the transformers and the UPSs across multiple servers. In this manner, the connection configurations 1 to 5 can be combined appropriately.

### Spatial arrangement of cooling equipment

Although the cooling efficiency of each rack and the cooling efficiency of each information processing device is expressed by Equations (2), (3), the air delivery loss γₐᵢᵣ from the air-conditioning unit 121 and the airflow loss γ_{flow_rack} around the rack 101, and the airflow loss γ_{flow_serv} around the information processing device are determined by the spatial arrangement of the cooling equipment, the racks, and the information processing devices. An example of the spatial arrangement of the cooling equipment will be described below.

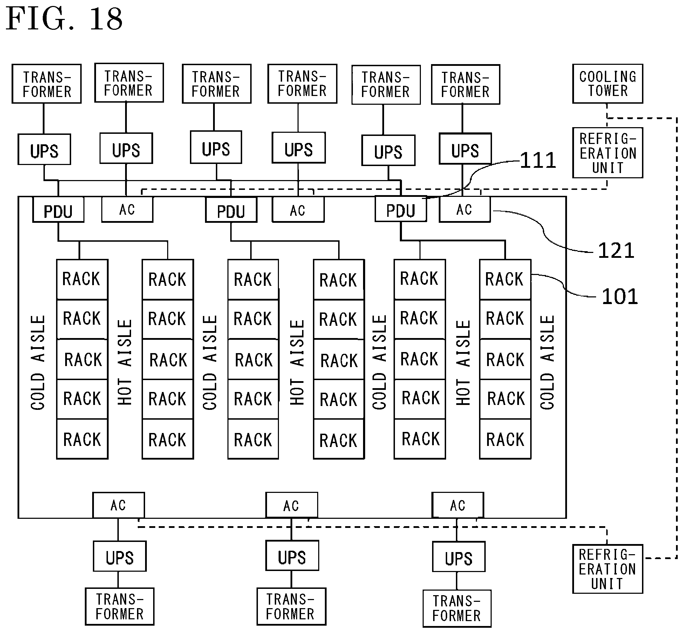

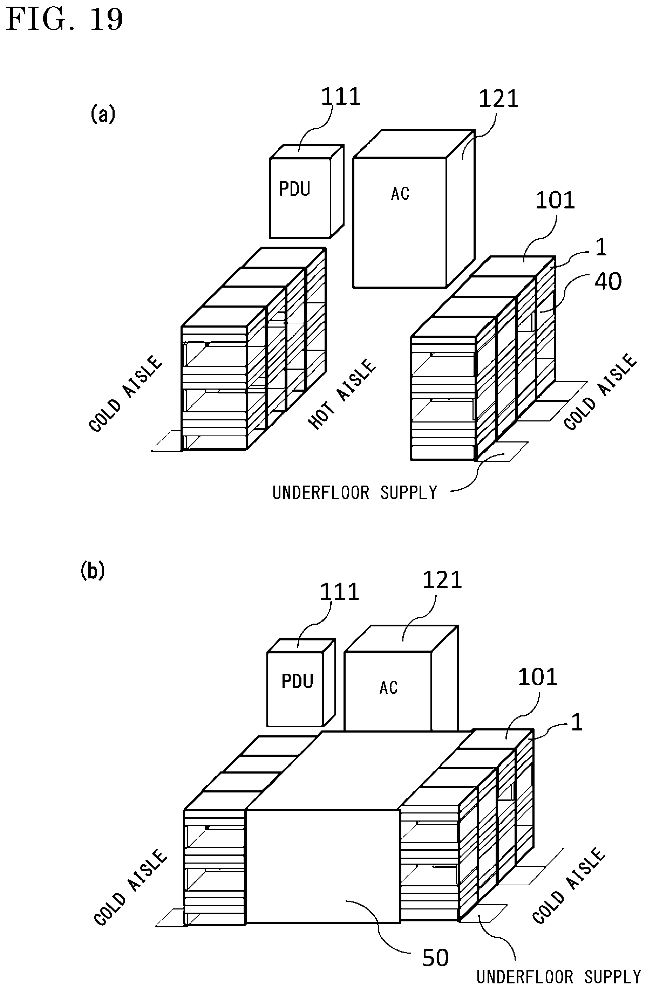

As shown in FIG. 18 and FIG. 19, the floor of the server room may be configured as a raised floor, as a configuration in which cold air is blown from the air conditioning system into the underfloor space and warm air is drawn in at the ceiling, the floor area, referred to as cold aisle, through which cold air is blown out, and the floor area (hot aisle) through which warm air from racks is exhausted, may be arranged so as to be distinguished from each other. In addition, a space may be formed between the information processing devices housed in the rack, and blank panels 40 may be installed in the rack such that cold air and warm air do not mix through this space (FIG. 19(a)).

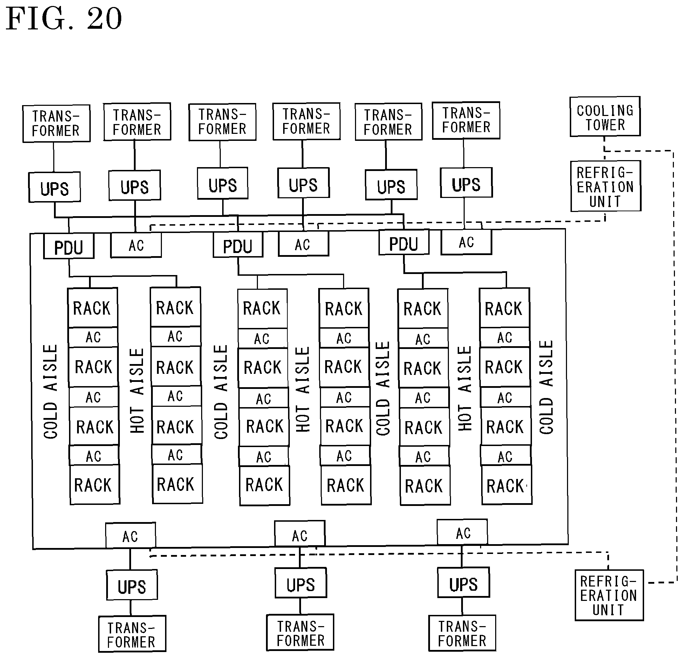

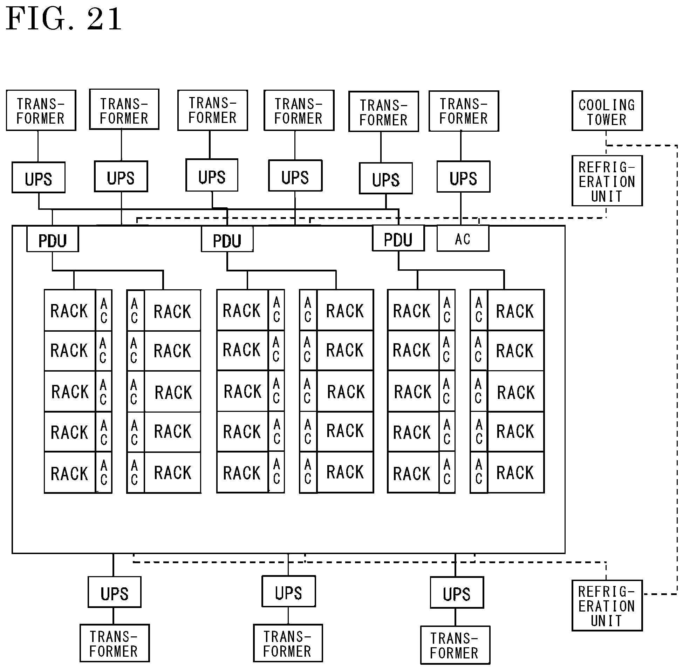

Further, in order to separate cold air from warm air, a containment 50 for physically partitioning the hot aisle or the cold aisle may be installed (FIG. 19(b)). Moreover, as shown in FIG. 20, local air conditioning units may be arranged between the racks (in-row cooling), and as shown in FIG. 21, air-conditioning units may be attached to the rear doors of the racks so that each rack is cooled individually.

### Embodiment 2

### Method for consolidating assigned jobs through live migration (within equipment group)

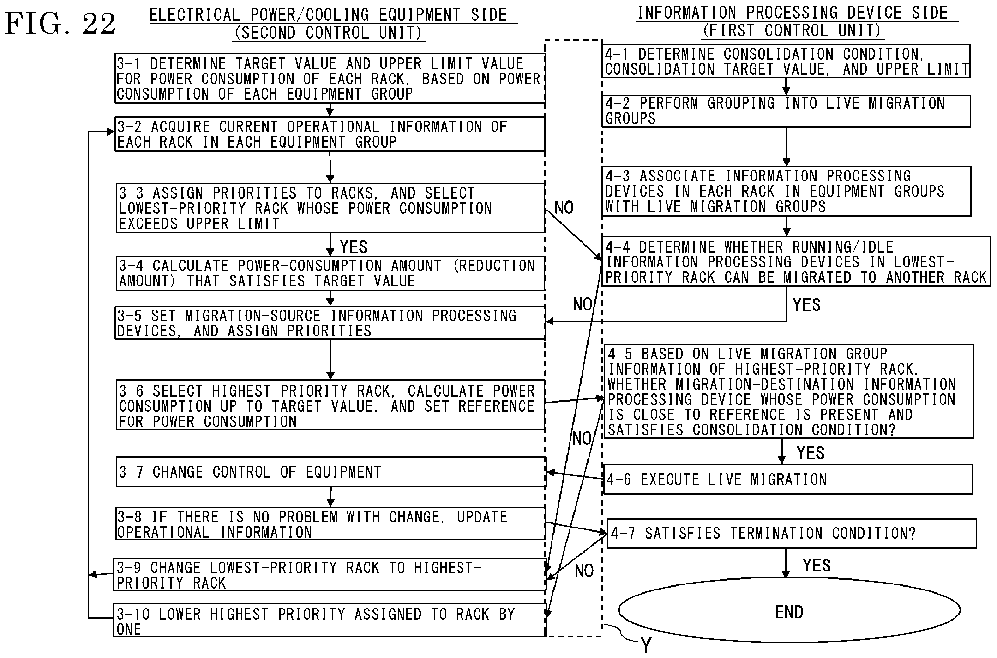

An example of a method for consolidating jobs, which have been assigned to the information processing devices in Embodiment 1, through live migration will be described with reference to FIG. 22. First, live migration that migrates and consolidates jobs within each equipment group will be described.

Here, live migration refers to migrating a job from one information processing device to another without stopping the information processing device that is executing the information processing of the job. In order to execute live migration, virtualization technologies are used to abstract CPUs and storage devices (such as memory and disks) such that the CPUs and the storage devices can be integrated and partitioned in software without being constrained by physical limitations. The present embodiment may be utilized when, after the assigned jobs have been completed, the operating state of the equipment significantly deviates from an ideal operating state with low power loss.

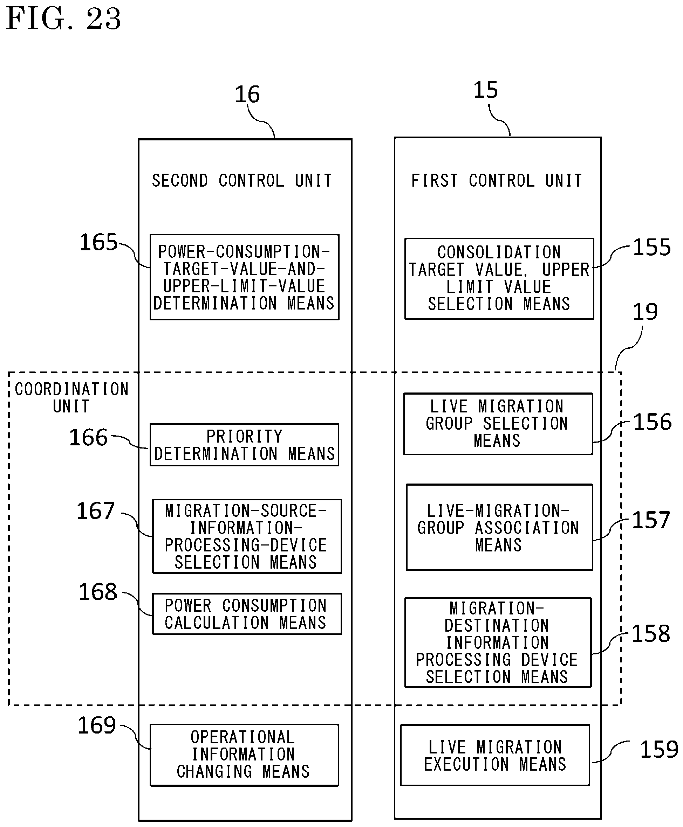

FIG. 23 shows an example of a functional block diagram including the first control unit 15, the second control unit 16, the coordination unit 19 according to Embodiment 2. Means 155 to 159 and 165 to 168 shown in FIG. 23 are examples of functions performed by the control units. The coordination unit 19 manages the coordination of information between the means 156 to 158 of the first control unit 15 and the means 166 to 168 of the second control unit.

The coordination unit 19, for example, performs coordination of information corresponding to arrows passing through a region indicated by a broken line Y between the "electrical power/cooling equipment side" flow and the "information processing device side" flow in FIG. 22. The flow in FIG. 23 may be implemented as hardware or by a program. FIG. 23 will be described below together with the description of FIG. 22.

First, on the basis of the current operational information of each equipment group, a target value and an upper limit value for the power consumption of each rack are determined by the second control unit 16 (3-1 in FIG. 22, means 165 in FIG. 23).

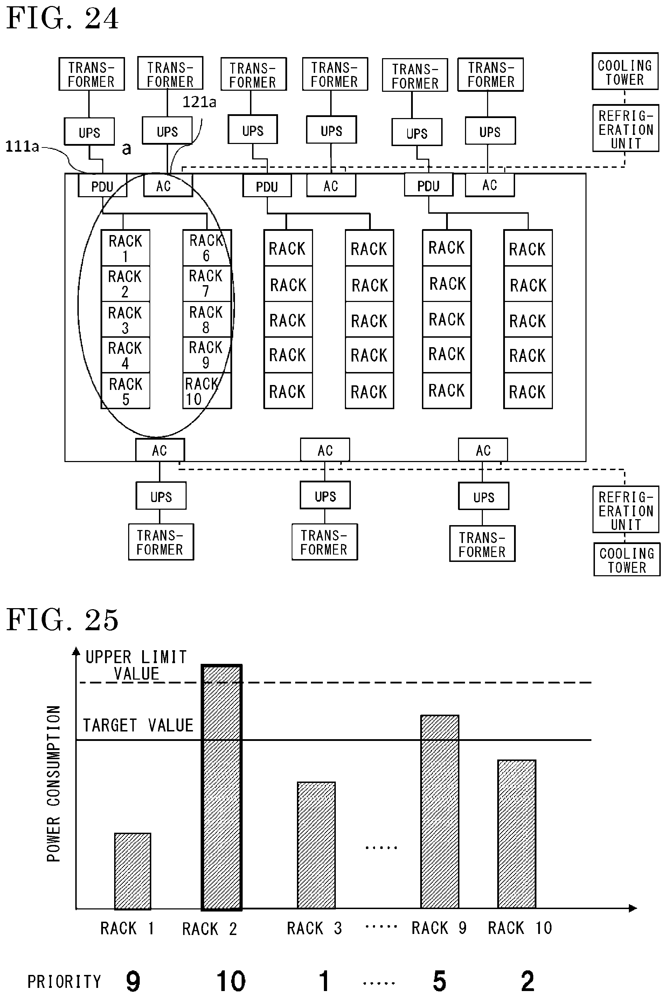

In the present embodiment, as shown in FIG. 24, an example using the racks 1 to 10 in the equipment group a as in Embodiment 1 will be described. The operational information of the equipment group is the same as that described in Embodiment 1. The second control unit 16 assigns priorities to the racks 1 to 10 as shown in FIG. 25 (3-3 in FIG. 22, means 166 in FIG. 23). It is assumed that the highest priority corresponds to a high-efficiency rack, and the lowest priority corresponds to a low-efficiency rack.

For example, a rack (rack 2 in FIG. 25) whose power consumption exceeds the upper limit value is assigned the lowest priority, and a rack (rack 1 in FIG. 25) whose power consumption does not reach the target value and largely deviates from the target value is assigned the next lowest priority. Meanwhile, a rack whose power consumption is equal to or greater than the target value and equal to or less than the upper limit value, such as the rack 9 shown in FIG. 25, is selected as a destination rack for job migration, but does not correspond to the highest-priority rack.

On the information processing device side, the first control unit 15 determines a consolidation condition and a consolidation target value (4-1 in FIG. 22, means 155 in FIG. 23). The consolidation target value is a target value used when information processing devices having low job-processing workloads are consolidated, and is determined in order to aggregate workloads such that the workloads fall within a range used as a target value for a consolidation destination or do not fall below that target value. Examples of the consolidation condition include a CPU utilization, a memory usage rate, and an IO load. When there are multiple consolidation conditions, the consolidation target value is set individually for each consolidation condition. For example, the consolidation target value may be specified as a range such as 40 to 60% in terms of the CPU utilization.

Further, on the information processing device side, the first control unit 15 performs grouping of the information processing devices in each rack into live migration groups (4-2 in FIG. 22, means 156 in FIG. 23). As an example of the grouping, a range available for live migration may be defined on the basis of physical states or environments, such as whether the storage of the information processing devices is shared or whether the information processing devices are compatible. Alternatively, the information processing devices may be grouped according to the intended use thereof, such as a domain name system (DNS) server, a file transfer protocol (FTP) server, and a Web server. Each information processing device in each rack in each equipment group is associated with the grouping of the corresponding live migration group (4-3 in FIG. 22, means 157 in FIG. 23).

If the rack assigned the lowest priority, as determined by the second control unit 16, is the rack 2 whose power consumption exceeds the upper limit value (3-3 in FIG. 22), an amount of power-consumption reduction necessary to satisfy a target value for the power consumption of each rack is calculated by the second control unit 16 (3-4 in FIG. 22, means 168 in FIG. 23). Further, among the information processing devices in the lowest-priority rack 2, priorities are assigned in order to determine migration-source information processing devices from which jobs are to be moved by live migration (3-5 in FIG. 22, means 166 in FIG. 23).

The jobs are moved from the migration-source information processing devices in the order of the priorities. The priorities may be assigned, for example, in the order of higher power consumption or longer processing time. Restrictions may be imposed on the priorities on the basis of the number of job migrations or power consumption.

If the lowest-priority rack is the rack 1 whose deviation from the target value is large, the first control unit 15 determines whether the workloads of the information processing devices in a running or idle state in the rack 1 can be migrated to another rack (4-4 in FIG. 22). In addition, among the information processing devices in the lowest-priority rack 1, priorities are assigned by the second control unit 16 in order to determine migration-source information processing devices from which jobs are to be moved by live migration (3-5 in FIG. 22, means 166 in FIG. 23).

The priorities may be assigned, for example, in the order of higher power consumption or longer processing time. Restrictions may be imposed on the priorities on the basis of the number of workload migrations or power consumption. If the jobs of the information processing devices in a running or idle state in the rack 1 cannot be migrated to another rack, the lowest-priority rack 1 may be changed to the highest-priority rack (3-9 in FIG. 22).

For the highest-priority and high-efficiency rack among the racks 1 to 10, for example, for a rack 3 in FIG. 25, the second control unit 16 calculates the amount of power consumption up to a target value (3-6 in FIG. 22, means 168 in FIG. 23). It is determined by the first control unit 15 whether or not a migration-destination information processing device, which is grouped into the same live migration group A as a migration-source information processing device x in the aforementioned rack 2, is present among the information processing devices in the rack 3 that are capable of processing a job that consumes power corresponding to, or close to, the calculated amount (4-5 in FIG. 22).

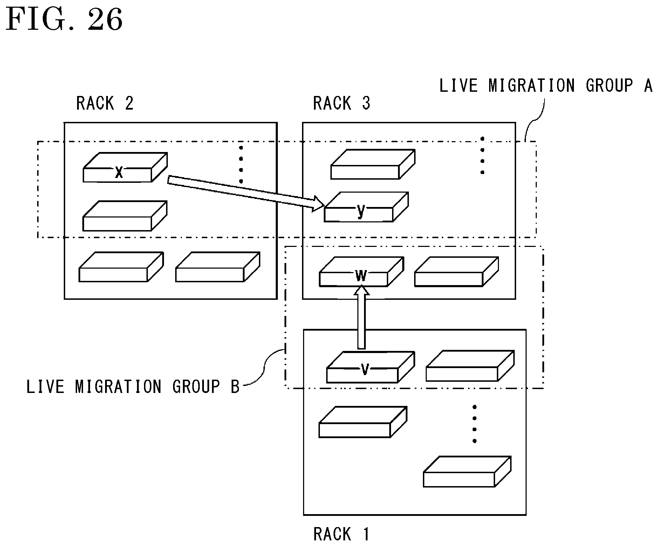

As shown in FIG. 26, if it is determined that an information processing device y corresponds to the migration-destination information processing device, live migration that migrates the job from the information processing device x to the information processing device y is executed by the first control unit 15 (4-6 in FIG. 22). If the migration-destination information processing device cannot be found in the rack 3, the highest priority assigned to the rack 3 may be lowered by one (3-10 in FIG. 22). In this case, the priority may be shifted to a rack 10 having the second highest priority, and the above-described determination up to execution of the live migration may be performed again.

After completion of execution of the live migration that migrates the job from the information processing device x to the information processing device y, changes occur in the control of the electrical power equipment 11a, 11b and the cooling equipment 12a, 12b due to the job consolidation, and thus, the changes are fed back into the operational information (3-7, 3-8 in FIG. 22, means 169 in FIG. 23). In addition, the lowest-priority rack 2 may be changed to the highest-priority rack as a result of the job consolidation (3-9 in FIG. 22). Due to the changes, the highest priority currently assigned to the rack is to be lowered by one (3-10 in FIG. 22).

In a similar manner, a live migration that migrates a job from a migration-source information processing device v in the rack 1 to a migration-destination information processing device w, which are grouped into the same live migration group B, may be executed.

Further, the job of the migration-source information processing device may be divided into parts and migrated, and the divided parts of the job may be consolidated and migrated. As examples of termination conditions of live migration, the time point at which job movement has been completed in all equipment groups, the time point at which the movement-source information processing device no longer has any jobs, or the time point at which a predetermined number of live migrations have been executed within the same equipment group may be considered.

However, live migration may be performed continuously without defining a termination point. In addition, job movement may be executed across equipment groups. After job consolidation through live migration, an information processing device that has become unnecessary may be stopped, and the operation of equipment that has become unnecessary in association therewith may also be halted.

As described above, in the information processing system according to Embodiment 2, job consolidation through live migration is performed within each equipment group, thereby enabling reduction in the power consumption of each equipment group.

### Embodiment 3

### Method for consolidating assigned jobs through live migration (between equipment groups)

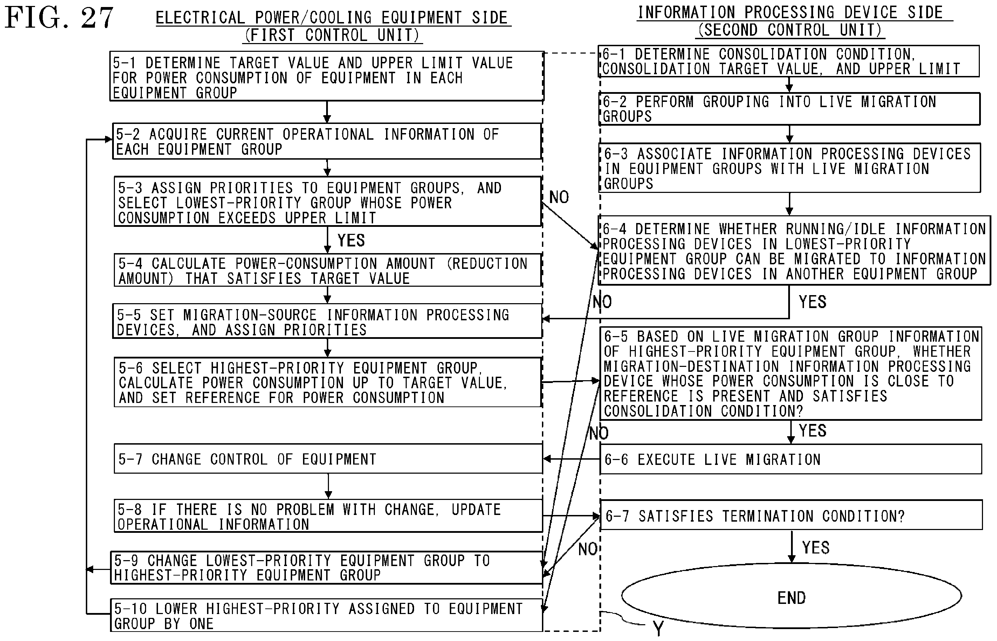

Next, a method for performing live migration of jobs between equipment groups will be described with reference to FIG. 27. The functional block diagram in FIG. 23 is also applicable to the present embodiment. In addition, the description for the region Y in FIG. 27 is also the same as in Embodiment 2. The present embodiment may be utilized when, after assigned jobs have been completed, the operating state of the equipment significantly deviates from an ideal operating state with low power loss.

On the basis of the current operational information of each equipment group, a target value and an upper limit value for the power consumption of each equipment group are determined by the second control unit 16 (5-1 in FIG. 27, means 165 in FIG. 23). This power consumption may include the power consumption of each information processing device in the equipment group.

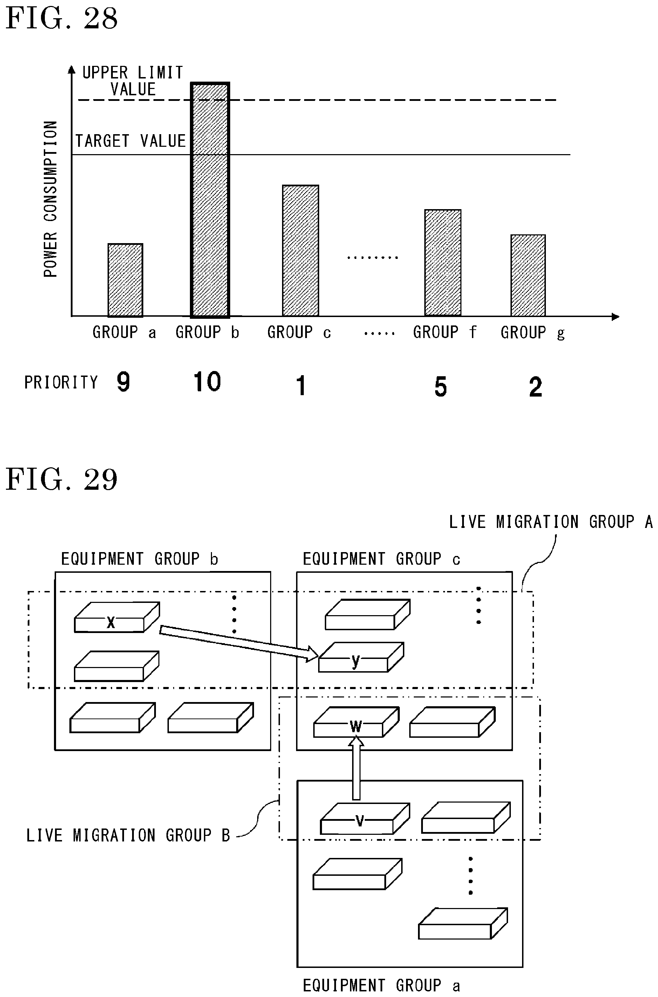

Here, an example using the equipment groups a to g described in Embodiment 1 will be described. The operational information of each equipment group is the same as that described in Embodiment 1. As shown in FIG. 28, the second control unit 16 assigns priorities to the equipment groups a to g. It is assumed that the highest priority corresponds to a high-efficiency equipment group, and the lowest priority corresponds to a low-efficiency equipment group.

For example, the lowest priority is assigned to an equipment group (e.g., equipment group b in FIG. 28) whose power consumption exceeds the upper limit, and the next lowest priority is assigned to an equipment group (e.g., equipment group a in FIG. 28) whose power consumption does not reach the target value and largely deviates from the target value. Meanwhile, an equipment group whose power consumption is equal to or greater than the target value and equal to or less than the upper limit value is selected as an equipment group to which a job is migrated, but does not correspond to the highest-priority equipment group.

On the information processing device side, the first control unit 15 determines a consolidation condition and a consolidation target value (6-1 in FIG. 27, means 155 in FIG. 23). The consolidation target value is a target value used when information processing devices having low workloads are consolidated, and is determined in order to aggregate workloads such that the workloads fall within a range used as a target value for a consolidation destination or do not fall below that target value. Examples of the consolidation condition include a CPU utilization, a memory usage rate, and an IO load. When there are multiple consolidation conditions, the consolidation target value is set individually for each consolidation condition. For example, the consolidation target value may be specified as a range such as 40 to 60% in terms of the CPU utilization.

Further, on the information processing device side, the first control unit 15 performs grouping of the information processing devices in each equipment group into live migration groups (6-2 in FIG. 27, means 156 in FIG. 23). As an example of the grouping, a range in which live migration is allowed may be defined on the basis of physical states or environments, such as whether the storage of the information processing devices in each equipment group is shared or whether the information processing devices are compatible. Alternatively, the information processing devices may be grouped according to intended use thereof, such as a domain name system (DNS) server, a file transfer protocol (FTP) server, and a Web server. Each information processing device in each equipment group is associated with the grouping of the corresponding live migration group (6-3 in FIG. 27, means 157 in FIG. 23).

If the equipment group assigned the lowest priority, as determined by the second control unit 16, is the equipment group b whose power consumption exceeds the upper limit value (5-3 in FIG. 27), an amount of power-consumption reduction necessary to satisfy a target value for the power consumption of each equipment group is calculated by the second control unit 16 (5-4 in FIG. 27, means 168 in FIG. 23).

Further, among the information processing devices in the lowest-priority equipment group b, priorities are assigned in order to determine migration-source information processing devices from which jobs are to be moved by live migration (5-5 in FIG. 27, means 166 in FIG. 23). The jobs are moved from the migration-source information processing devices in the order of the priorities (6-6 in FIG. 27). The priorities may be assigned, for example, in the order of higher power consumption or longer processing time. Restrictions may be imposed on the priorities on the basis of the number of job migrations or power consumption.

If the lowest-priority equipment group is an equipment group a whose deviation from the target value is large, the first control unit 15 determines whether the workloads of the information processing devices in a running or idle state in the equipment group a can be migrated to another equipment group (6-4 in FIG. 27). In addition, among the information processing devices in the lowest-priority equipment group, priorities are assigned by the second control unit 16 in order to determine migration-source information processing devices from which jobs are to be moved by live migration (5-5 in FIG. 27, means 166 in FIG. 23).

The priorities may be assigned, for example, in the order of higher power consumption or longer processing time. Restrictions may be imposed on the number of workload migrations or power consumption. If the jobs of the information processing devices in a running or idle state in the equipment group a cannot be migrated to another equipment group, the equipment group a may be changed to the highest-priority equipment group (5-9 in FIG. 27).

For the highest-priority and high-efficiency equipment group among the equipment groups a to g, for example, for an equipment group c in FIG. 28, the second control unit 16 calculates the amount of power consumption up to a target value (5-6 in FIG. 27, means 168 in FIG. 23). It is determined whether or not a migration-destination information processing device, which is grouped into the same live migration group A as a migration-source information processing device x in the aforementioned equipment group b, is present among the information processing devices in the equipment group c that are capable of processing a job that consumes power corresponding to, or close to, the calculated amount (6-5 in FIG. 27).

As shown in FIG. 29, if it is determined that an information processing device y corresponds to the migration-destination information processing device, a live migration that migrates the job from the information processing device x to the information processing device y is executed (6-6 in FIG. 27). If the migration-destination information processing device cannot be found in the equipment group c, the highest priority assigned to the equipment group c may be lowered by one (5-10 in FIG. 27). In this case, the priority may be shifted to an equipment group f having the second highest priority, and the above-described determination up to execution of the live migration may be performed.

After completion of execution of the live migration that migrates the job from the information processing device x to the information processing device y, changes occur in the control of the electrical power equipment 11a, 11b and the cooling equipment 12a, 12b due to the job consolidation, and thus, the changes are fed back into the operational information (5-7, 5-8 in FIG. 27, means 169 in FIG. 23). In addition, the lowest-priority equipment group may be changed to the highest-priority equipment group as a result of the job consolidation (5-9 in FIG. 27). Due to the changes, the highest priority currently assigned to the equipment group is to be lowered by one (5-10 in FIG. 27).

In a similar manner, a live migration that migrates a job from a migration-source information processing device v in the equipment group a to a migration-destination information processing device w in the equipment group c, which are grouped into the same live migration group B, may be executed.

Further, the job of the migration-source information processing device may be divided into parts and migrated, and the divided parts of the job may be consolidated and migrated. As examples of termination conditions of live migration, the time point at which job movement has been completed in all equipment groups, the time point at which the movement-source information processing device no longer has any jobs, or the time point at which a predetermined number of live migrations have been executed within the same equipment group may be considered. However, live migration may be performed continuously without defining a termination point. After job consolidation through live migration, an information processing device that has become unnecessary may be stopped, and the operation of equipment that has become unnecessary in association therewith may also be halted.

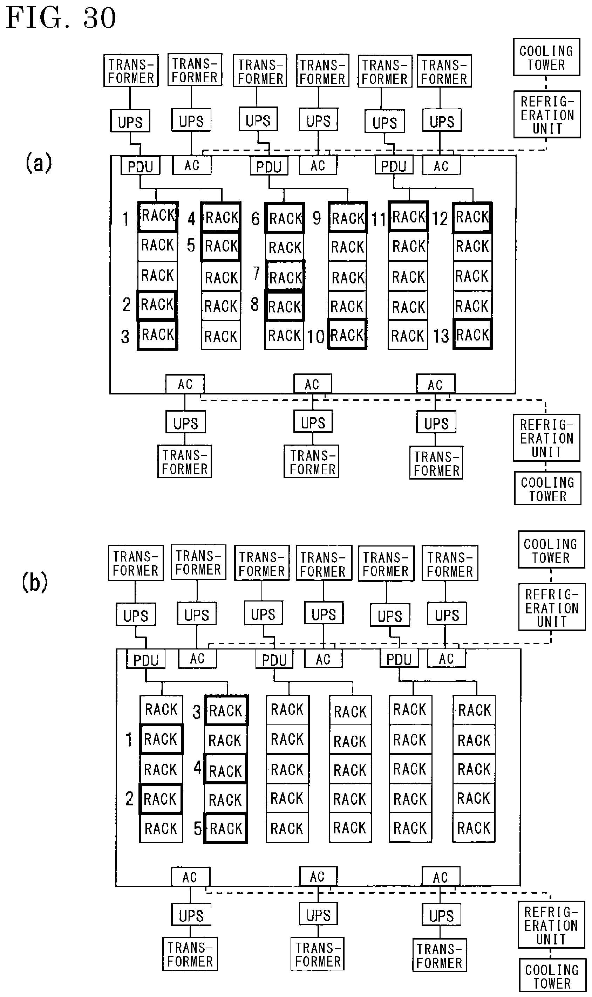

As described above, in the information processing system according to Embodiment 3, job consolidation through live migration is performed between equipment groups, thereby enabling reduction in the power consumption of each equipment group. For example, jobs can be consolidated from thirteen running racks as shown in FIG. 30(a) into five running racks as shown in FIG. 30(b). Accordingly, it is possible to prevent low-load information processing devices from being scattered and to reduce power loss of equipment.

### Embodiment 4

### Method for assigning and consolidating jobs through live migration (zero base)

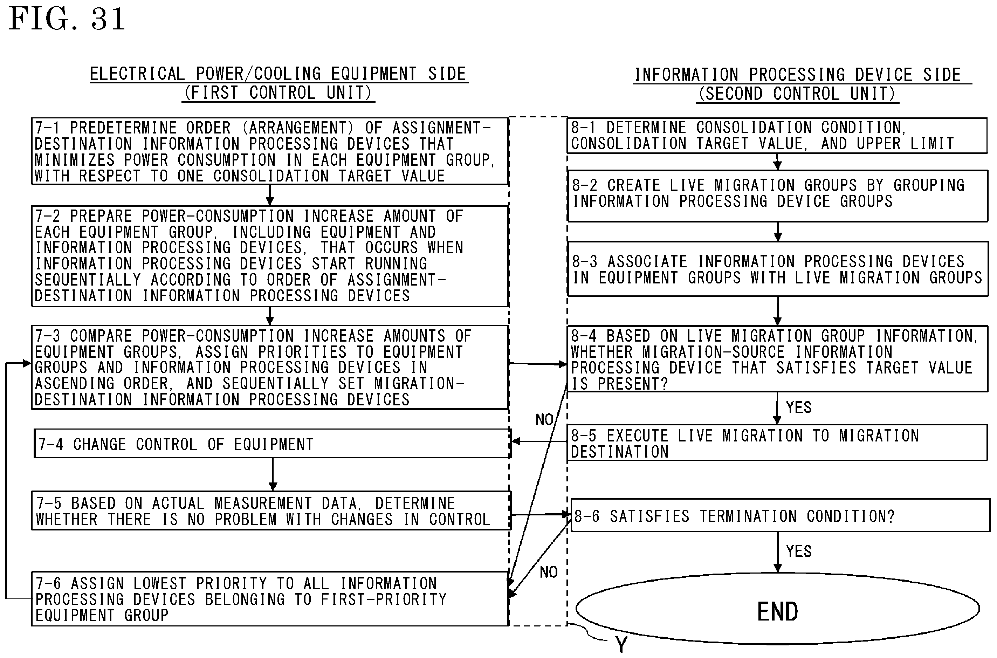

Next, a method for performing so-called zero-base live migration will be described with reference to FIG. 31. In this method, jobs are assigned and consolidated on the assumption of the power consumption of each equipment group with respect to a consolidation target value therefor in a state with no job traffic at all, without considering the present job processing state. This method is performed, for example, by combining the job assignment described in Embodiment 1 with the job consolidation described in Embodiment 2 or 3.

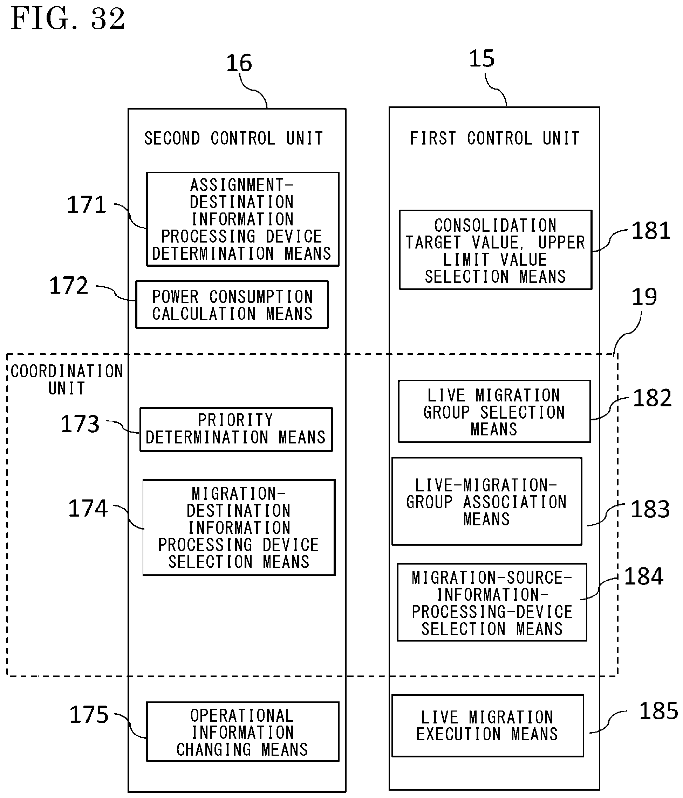

FIG. 32 shows an example of a functional block diagram including the first control unit 15, the second control unit 16, and the coordination unit 19 according to Embodiment 4. Means 171 to 175 and 181 to 185 shown in FIG. 32 are examples of functions performed by the control units. The coordination unit 19 manages the coordination of information between the means 182 to 184 of the first control unit 15 and the means 173 and 174 of the second control unit. The coordination unit 19, for example, performs coordination of information corresponding to arrows passing through a region indicated by a broken line Y between the "electrical power/cooling equipment side" flow and the "information processing device side" flow in FIG. 22. The flow in FIG. 31 may be implemented as hardware or by a program. FIG. 32 will be described below together with the description of FIG. 31.

First, on the information processing device side, the first control unit 15 determines a consolidation condition and a consolidation target value (8-1 in FIG. 31, means 181 in FIG. 32). The consolidation target value is a target value used when information processing devices having low workloads are consolidated, and is determined in order to aggregate workloads such that the workloads fall within a range used as a target value for a consolidation destination or do not fall below that target value. Examples of the consolidation condition include a CPU utilization, a memory usage rate, and an IO load.

When there are multiple consolidation conditions, the consolidation target value is set individually for each consolidation condition. For example, the consolidation target value may be specified as a range such as 40 to 60% in terms of the CPU utilization. In the present embodiment, a CPU utilization of 40% is set as the consolidation target value.

Further, on the information processing device side, the first control unit 15 performs grouping of the information processing devices in each equipment group into live migration groups (8-2 in FIG. 31, means 182 in FIG. 32). As an example of the grouping, a range in which live migration is allowed may be defined on the basis of physical states or environments, such as whether the storage of the information processing devices in each equipment group is shared or whether the information processing devices are compatible. Alternatively, the information processing devices may be grouped according to intended use thereof, such as a domain name system (DNS) server, a file transfer protocol (FTP) server, and a Web server. Each information processing device in each equipment group is associated with the grouping of the corresponding live migration group (8-3 in FIG. 31, means 183 in FIG. 32).

In the second control unit 16, an optimal order of assignment-destination information processing devices that minimizes power consumption is predefined in each equipment group, with respect to the consolidation target value that is set to a CPU utilization of 40% (7-1 in FIG. 31, means 171 in FIG. 32). In determining the order, the cooling efficiency of air conditioning system according to the physical arrangement of the information processing devices, three-phase load balancing, power distribution losses in the electrical power equipment, and the like are considered.

The second control unit 16 prepares a value of the amount of increase in the power consumption of the equipment group, including the electrical power equipment and the cooling equipment, that occurs when information processing devices start running sequentially according to the predetermined order of the assignment-destination information processing devices (7-2 in FIG. 31, means 172 in FIG. 32).

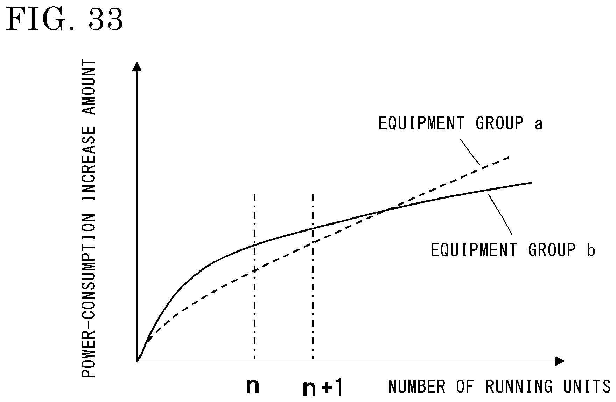

The amount of increase in the power consumption may include the power consumption of the information processing devices. Reference may be made to Equation (1) described in Embodiment 1, for the amount of increase in the power consumption of each of the power equipment and the cooling equipment. FIG. 33 shows an example of the relationship between the number of running information processing devices and the amount of increase in the power consumption of each equipment group.

The values of the amounts of increase in the power consumption of the equipment groups are compared, priorities are assigned to the equipment groups and the information processing devices in ascending order of the amounts of increase in the power consumption, and the information processing devices are sequentially set as migration-destination information processing devices (7-3 in FIG. 31, means 173, 174 in FIG. 32). For example, when one information processing device is running in an equipment group b and zero information processing devices are running in an equipment group c, the amounts of increase in power consumption are compared using the amount of power that increases when a second device starts running in the equipment group b and the amount of power that increases when a first device starts running in the equipment group c.

A migration-source information processing device that brings the CPU utilization of a first-priority migration-destination information processing device, whose predicted value of an increase in power consumption is the smallest, close to the consolidation target value of 40%, is selected from the same live migration group as the first-priority migration-destination information processing device (8-4 in FIG. 31, means 184 in FIG. 32). Live migration from the selected migration-source information processing device to the first-priority migration-destination information processing device is executed (8-5 in FIG. 31, means 185 in FIG. 32).

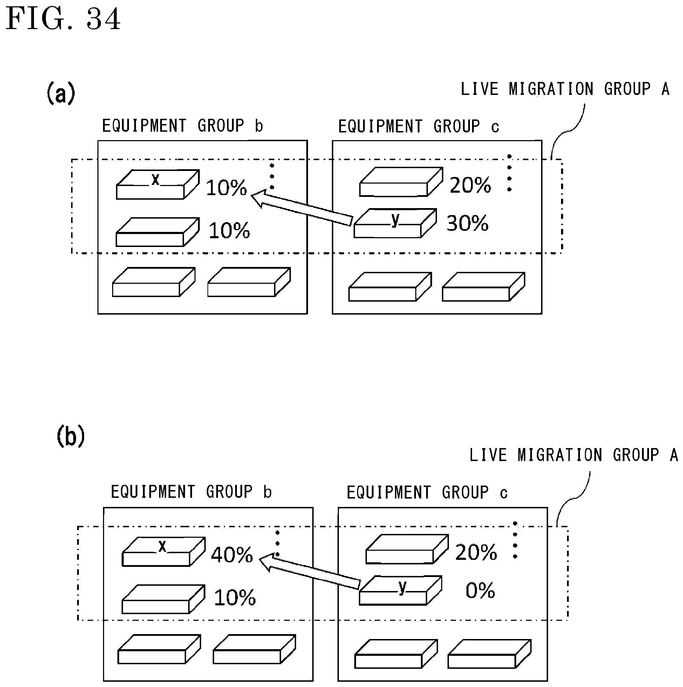

In FIG. 34, for the first-priority migration-destination information processing device x that incurs the smallest increase in power consumption in the equipment group b, a migration-source information processing device y having a CPU utilization of 30%, which is close to the consolidation target value, is selected from the same live migration group A (FIG. 34(a)), and live migration is executed to consolidate jobs (FIG. 34(b)). Since such procedures are sequentially performed, it is possible, for example, to more quickly consolidate the jobs from the thirteen running racks shown in FIG. 30(a) into the five running racks shown in FIG. 30(b), as described above, as compared with the method described in Embodiment 3.

If the migration-source information processing device that brings the CPU utilization close to the consolidation target value of 40% cannot be selected from the same live migration group, the lowest priority may be assigned to all information processing devices in the equipment group to which the first-priority information processing device belongs, and the operation of assigning the priorities may be performed again (7-6 in FIG. 31).

Due to job consolidation through live migration based on predicted values, changes occur in the control of the information processing devices, the electrical power equipment 11a, 11b, and the cooling equipment 12a, 12b. It is determined whether or not the operation in this changed control state corresponds to the assumed operation conditions. For example, on the basis of actual measurement data, it is determined whether or not overcooling, insufficient cooling, three-phase load imbalance, equipment efficiency, or the like has occurred (7-4, 7-5 in FIG. 31, means 175 in FIG. 32).

If, as a result of executing live migration, the upper limit of the consolidation target value for the migration-destination information processing device is exceeded, an equipment group available for migration may be set within the same live migration group, and migration may be performed again. Further, in order to satisfy the consolidation target value for the migration-destination information processing device, the job of the migration-source information processing device may be divided, and live migration to the migration-destination information processing device may be executed.

Moreover, a plurality of migration-destination information processing devices may be selected, and live migration may be executed. In the above description, the amounts of increase in power consumption are compared. However, the amounts of power consumption may be compared instead of using the amounts of increase in power consumption.

As examples of termination conditions of live migration, the time point at which job movement has been completed in all equipment groups, the time point at which the movement-source information processing device no longer has any jobs, or the time point at which a predetermined number of live migrations have been executed in the same equipment group may be considered. However, live migration may be performed continuously without defining a termination point. After job consolidation through live migration, an information processing device that has become unnecessary may be stopped, and the operation of equipment that has become unnecessary in association therewith may also be halted.

As described above, in the information processing system according to Embodiment 4, jobs are assigned and consolidated simultaneously on the assumption of the power consumption of each equipment group in an ideal state with respect to a consolidation target value therefor, in a state with no job traffic at all, without considering the present job processing state, leading to reduction in power consumption. Accordingly, it is possible to prevent low-load information processing devices from being scattered and to reduce power loss of equipment while minimizing time loss.

Although the invention is described above in terms of various exemplary embodiments and implementations, it should be understood that the various features, aspects, and functionality described in one or more of the individual embodiments are not limited in their applicability to the particular embodiment with which they are described, but instead can be applied, alone or in various combinations to one or more of the embodiments of the invention.

It is therefore understood that numerous modifications which have not been exemplified can be devised without departing from the scope of the present invention. For example, at least one of the constituent components may be modified, added, or eliminated. At least one of the constituent components mentioned in at least one of the preferred embodiments may be selected and combined with the constituent components mentioned in another preferred embodiment.

Hereinafter, modes of the present invention are summarized as additional notes.

### Additional note 1

An information processing system which includes electrical power equipment that supplies power to information processing devices in a server room and cooling equipment that cools the server room, the information processing system including: a first control unit that controls the information processing devices; and a second control unit that controls the electrical power equipment and the cooling equipment, wherein the second control unit calculates a predicted value of an increase in power consumption of each of equipment groups configured by combining a plurality of the information processing devices, a plurality of pieces of the electrical power equipment, and a plurality of pieces of the cooling equipment according to an arrangement in the server room, on the basis of operational information of the electrical power equipment and the cooling equipment that are operating, the first control unit selects an information processing device that satisfies a processing condition for assigning a new job, and among equipment groups including the selected information processing device, the new job is assigned to an equipment group that incurs a smallest increase in power consumption resulting from an increase in power of the selected information processing device.

### Additional note 2

An information processing system which includes electrical power equipment that supplies power to information processing devices in a server room and cooling equipment that cools the server room, the information processing system including: a first control unit that controls the information processing devices; and a second control unit that controls the electrical power equipment and the cooling equipment, wherein equipment groups are configured by selecting and combining a plurality of the information processing devices, a plurality of pieces of the electrical power equipment, and a plurality of pieces of the cooling equipment according to an arrangement in the server room, the second control unit calculates an amount of increase in power consumption of each of the equipment groups, on the basis of a predetermined utilization rate of each information processing device, and the first control unit is controlled such that a job is moved to an information processing device in an equipment group that incurs a smallest increase in power consumption.

### Additional note 3

An information processing system which includes electrical power equipment that supplies power to information processing devices in a server room and cooling equipment that cools the server room, the information processing system including: a first control unit that controls the information processing devices; and a second control unit that controls the electrical power equipment and the cooling equipment, wherein equipment groups are configured by selecting and combining a plurality of the information processing devices, a plurality of pieces of the electrical power equipment, and a plurality of pieces of the cooling equipment according to an arrangement in the server room, the second control unit calculates the amount of increase in power consumption of each of the equipment groups, on the basis of operational information of the electrical power equipment and the cooling equipment that are operating, and the first control unit is controlled such that a job is moved to an information processing device in an equipment group that incurs a smallest increase in power consumption.

### Additional note 4

The information processing system according to Additional note 3, wherein the job is moved from a different information processing device in a same equipment group.

### Additional note 5

The information processing system according to Additional note 3, wherein the job is moved from an information processing device in a different equipment group.

### Additional note 6

The information processing system according to Additional note 4 or 5, wherein an information processing device to which the job is moved and an information processing device from which the job is moved have a same physical environment or a same intended use.

### Additional note 7

The information processing system according to any one of Additional notes 1 to 6, further including a coordination unit that selects and receives information for control performed by the first control unit from the second control unit, and that selects and receives information for control performed by the second control unit from the first control unit.

### DESCRIPTION OF THE REFERENCE CHARACTERS

1-1 to 1-n information processing device
10, 10a, 10b information processing system
11a, 11b electrical power equipment
12a, 12b cooling equipment
13 electrical power monitoring unit
14 cooling monitoring unit
15 first control unit
16 second control unit
17 general-purpose network
18 management device
19 coordination unit
20 operation management device
30, 30a server room
40 blank panel
50 containment
100 processor
101, 101a, 101b rack
111, 111a, 111b PDU
112, 112a, 112b UPS
113, 113a, 113b transformer
121, 121a, 121b, 121c air-conditioning unit
122 refrigeration unit
123, 123a, 123b cooling tower
200 storage device

## Claims

1. An information processing system which includes electrical power equipment that supplies power to information processing devices in a server room and cooling equipment that cools the server room,
the information processing system comprising:
a first control unit that controls the information processing devices; and
a second control unit that controls the electrical power equipment and the cooling equipment, wherein
the second control unit calculates a predicted value of an increase in power consumption of each of equipment groups configured by combining a plurality of the information processing devices, a plurality of pieces of the electrical power equipment, and a plurality of pieces of the cooling equipment according to an arrangement in the server room, on the basis of operational information of the electrical power equipment and the cooling equipment that are operating,
the first control unit selects an information processing device that satisfies a processing condition for assigning a new job, and
among equipment groups including the selected information processing device, the new job is assigned to an equipment group that incurs a smallest increase in power consumption resulting from an increase in power of the selected information processing device.

2. An information processing system which includes electrical power equipment that supplies power to information processing devices in a server room and cooling equipment that cools the server room,
the information processing system comprising:
a first control unit that controls the information processing devices; and
a second control unit that controls the electrical power equipment and the cooling equipment, wherein
equipment groups are configured by selecting and combining a plurality of the information processing devices, a plurality of pieces of the electrical power equipment, and a plurality of pieces of the cooling equipment according to an arrangement in the server room,
the second control unit calculates an amount of increase in power consumption of each of the equipment groups, on the basis of a predetermined utilization rate of each information processing device, and
the first control unit is controlled such that a job is moved to an information processing device in an equipment group that incurs a smallest increase in power consumption.

3. An information processing system which includes electrical power equipment that supplies power to information processing devices in a server room and cooling equipment that cools the server room,
the information processing system comprising:
a first control unit that controls the information processing devices; and
a second control unit that controls the electrical power equipment and the cooling equipment, wherein
equipment groups are configured by selecting and combining a plurality of the information processing devices, a plurality of pieces of the electrical power equipment, and a plurality of pieces of the cooling equipment according to an arrangement in the server room,
the second control unit calculates the amount of increase in power consumption of each of the equipment groups, on the basis of operational information of the electrical power equipment and the cooling equipment that are operating, and
the first control unit is controlled such that a job is moved to an information processing device in an equipment group that incurs a smallest increase in power consumption.

4. The information processing system according to claim 3,
wherein the job is moved from a different information processing device in a same equipment group.

5. The information processing system according to claim 3,
wherein the job is moved from an information processing device in a different equipment group.

6. The information processing system according to claim 4 or 5,
wherein an information processing device to which the job is moved and an information processing device from which the job is moved have a same physical environment or a same intended use.

7. The information processing system according to any one of claims 1 to 6, further comprising a coordination unit that selects and receives information for control performed by the first control unit from the second control unit, and that selects and receives information for control performed by the second control unit from the first control unit.
